# EUROPEAN PATENT APPLICATION

(11) **EP 4 786 248 A1**
(43) Date of publication of application: **05.08.2026**
(21) Application number: 24871421.4
(22) Date of filing: 27.06.2024
(51) Int. Cl.: B60L 5/38, B60C 19/00, B60M 7/00

(54) **WHEEL TYPE POWER RECEPTION BODY**

(30) Priority: 25.09.2023 JP 2023160055; 26.02.2024 JP 2024026763
(71) Applicant: AISIN CORPORATION, Kariya-shi, Aichi 448-8650 (JP)
(72) Inventor: AOKI Kenji, Kariya-shi, Aichi 448-8650 (JP); NIWA Eiji, Kariya-shi, Aichi 448-8650 (JP); AMANO Shinya, Kariya-shi, Aichi 448-8650 (JP); YAMADA Taiki, Kariya-shi, Aichi 448-8650 (JP); KITAMURA Yuichiro, Kariya-shi, Aichi 448-8650 (JP); FUJISAKI Dai, Kariya-shi, Aichi 448-8650 (JP)
(74) Representative: Winter, Brandl - Partnerschaft mbB
(86) International application number: PCT/JP2024/023314
(87) International publication number: WO 2025/069617

(57) **Abstract**

A tire (80) of a wheel-type power reception body (10) has an annular tread section (80b) forming a tread surface (80a). A conductive band (60) is a band-shaped member having conductivity and flexibility and is continuously disposed in a circumferential direction. A plurality of conductive bodies (83) are disposed so as to extend through the tread section (80b) and are electrically connected to the conductive band (60).

## Description

### Technical Field

The present invention relates to a wheel-type power reception body that receives electric power supplied from a power supply body installed on a road surface.

### Background Art

JP S51-023901A (Patent Document 1) discloses a wheel-type power reception body that includes a plurality of electrodes (3), one end of each of which is embedded in a tire (1), a connection line (5) passing through an inner chamber of the tire and electrically connected to a vehicle, and transmission lines (4a, 4b) each electrically connecting one end of a corresponding electrode (3) to the connection line (5) and forming two or more systems of collector circuits.

### Prior Art Documents

### Patent Documents

Patent Document 1: JP S51-023901A

### Disclosure of the Invention

### Problem to be Solved by the Invention

In Patent Document 1, an elastic tire is used as the tire. Thus, even when a road surface has steps or projections, the contact surface of the tire deforms in accordance with such irregularities. This makes it possible to maintain a stable contact state and to stabilize power reception. However, in Patent Document 1, the entirety of a plurality of transmission lines forming the collector circuits are embedded in the elastic tire. Therefore, in Patent Document 1, when attempting to increase the number of transmission lines to increase the amount of receivable electric power, or when attempting to increase the diameter of the transmission lines, the transmission lines may hinder elastic deformation of the tire.

Accordingly, it is desired to realize a wheel-type power reception body that facilitates ensuring ease of elastic deformation of a tire.

### Means for Solving Problem

A wheel-type power reception body according to the present disclosure is a wheel-type power reception body configured to roll on a surface of a power supply body installed on a road surface of a road in such a manner as to extend along the road, and receive electric power supplied from the power supply body, and includes: a tire formed of an elastic material and containing an inner chamber; a conductive band disposed in the inner chamber; and a plurality of conductive bodies dispersed along a tread surface serving as an outer peripheral surface of the tire, wherein the tire has an annular tread section forming the tread surface, the conductive band is a band-shaped member having conductivity and flexibility, and is continuously disposed along a circumferential direction of the tire, and each of the plurality of conductive bodies is disposed in such a manner as to extend through the tread section, and is electrically connected to the conductive band.

According to this configuration, each of the conductive bodies dispersed along the tread surface of the tire is disposed so as to extend through the tread section. Thus, even while the tire is rotating, a portion of one of the conductive bodies that is exposed in the tread surface comes into contact with the power supply body, enabling power reception from the power supply body. In addition, since each of the conductive bodies is electrically connected to the conductive band that is continuously disposed along the circumferential direction of the tire, it is possible to easily enhance the reliability of conductive connection of conductive paths for receiving electric power from the plurality of conductive bodies. Furthermore, the conductive band is a band-shaped flexible member and is disposed in the inner chamber of the tire, thereby making it possible to ensure ease of elastic deformation of the tire while allowing the connection between a large number of conductive bodies and the conductive band.

### Brief Description of the Drawings

FIG. 1 is a side view of a power supply system that includes a wheel-type power reception body according to a first embodiment.
FIG. 2 is a side view of the power supply system of FIG. 1.
FIG. 3 is a side view illustrating a coupling mechanism of FIG. 2 that is in a contacting orientation.
FIG. 4 is a side view illustrating the coupling mechanism of FIG. 2 that is in a retracted orientation.
FIG. 5 is a side view illustrating the coupling mechanism of FIG. 2 that is in a stored orientation.
FIG. 6 is a cross-sectional view illustrating the coupling mechanism of FIG. 2 that is in the contacting orientation.
FIG. 7 is a cross-sectional view illustrating the coupling mechanism shown FIG. 2 that is in the retracted orientation.
FIG. 8 is a cross-sectional view illustrating the coupling mechanism of FIG. 2 in a turning state.
FIG. 9 is a cross-sectional view illustrating the coupling mechanism of FIG. 2 that is in the stored orientation.
FIG. 10 is an enlarged view of the wheel-type power reception body of FIG. 6.
FIG. 11 is a cross-sectional view of the wheel-type power reception body of FIG. 10, taken along line XI-XI.
FIG. 12 is a side view of a transmission mechanism with the coupling mechanism of FIG. 3 in the contacting orientation.
FIG. 13 is a cross-sectional view of the transmission mechanism with the coupling mechanism of FIG. 3 in the contacting orientation.
FIG. 14 is a cross-sectional view of the transmission mechanism with the coupling mechanism of FIG. 3 in the stored orientation.
FIG. 15 is a side view of a power supply system that includes a wheel-type power reception body according to a second embodiment.
FIG. 16 is an enlarged view of the wheel-type power reception body of FIG. 15.
FIG. 17 is a cross-sectional view of the wheel-type power reception body of FIG. 16, taken along line XVII-XVII.
FIG. 18 is a cross-sectional view of the wheel-type power reception body of FIG. 17, taken along line XVIII-XVIII.
FIG. 19 shows the wheel-type power reception body of FIG. 17 that has rotated.
FIG. 20 shows the wheel-type power reception body of FIG. 18 that has rotated.

### Best Mode for Carrying out the Invention

### [First Embodiment]

A wheel-type power reception body 10 (hereinafter referred to as a "power reception body 10") according to the first embodiment will be described below with reference to the drawings.

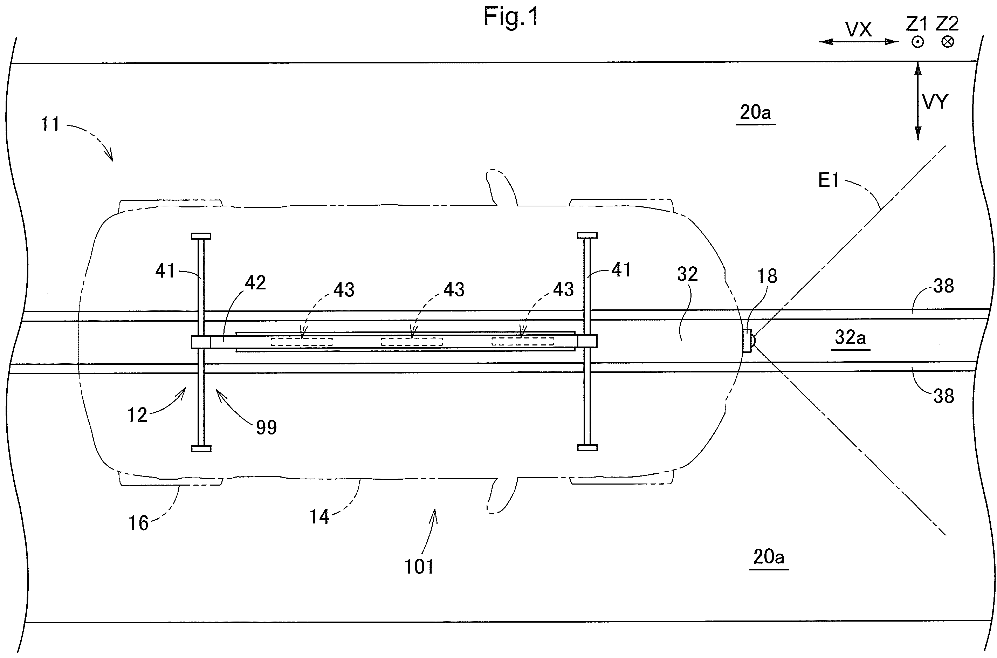

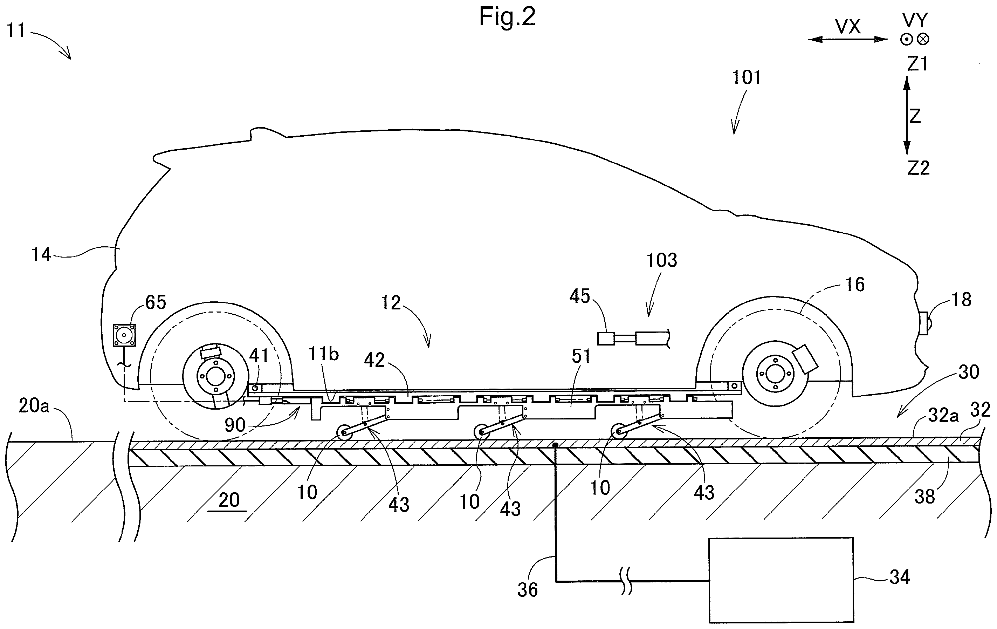

FIG. 1 is a top view of a power supply system 101 that includes a power reception device 12. FIG. 2 is a side view of the power supply system 101 that includes the power reception device 12. The power reception device 12 includes the power reception body 10. The power reception device 12 is mounted in a vehicle 11 and receives electric power supplied from a power supply facility 30 while the vehicle 11 is traveling. The power supply facility 30 includes a power supply body 32. Here, the term "vehicle front-rear direction VX" refers to a front-rear direction of the vehicle 11, and the term "vehicle width direction VY" refers to a direction orthogonal to the vehicle front-rear direction VX as viewed in an up-down direction (vertical direction).

As shown in FIGS. 1 and 2, the power reception device 12 is provided in the power supply system 101 that supplies electric power to a moving power supply target 103. The power supply system 101 includes the power supply facility 30 that supplies electric power, the power supply target 103 that receives electric power supplied from the power supply facility 30, and the power reception body 10. The power reception body 10 forms a conductive path for supplying electric power from the power supply facility 30 to the power supply target 103.

The power reception body 10 rolls on a surface 32a of the power supply body 32 to receive the electric power supplied from the power supply body 32. In the present embodiment, the surface 32a on which the power reception body 10 rolls is an upper surface of the power supply body 32. The power supply body 32 is installed on a road surface 20a of a road 20 so as to extend along the road 20. Here, regarding the shape of a member, the expression "extend along a certain direction" is used to encompass not only shapes in which the extension direction of the member is parallel to a reference direction that is the "certain direction", but also shapes in which the extension direction of a portion or the entirety of the member intersects the reference direction, as well as shapes in which the overall extension direction of the member is within a predetermined range (e.g., 45 degrees or less) relative to the reference direction. In the illustrated example, the vehicle front-rear direction VX and the direction in which the power supply body 32 extends along the road 20 are the same direction.

In the present embodiment, the power supply facility 30 includes a power source 34 and the power supply body 32. The power source 34 includes a system capable of supplying electric power, such as a battery, a commercial power grid, or a private power generation device. The power supply body 32 includes members that form a path through which current from the power source 34 flows, such as rails and cables. In the present embodiment, the power supply body 32 is connected to the power source 34 via an electric wire 36 to receive electric power. For example, the power supply body 32 is connected to a remote power source 34 via the electric wire 36 and supplied with electric power, and supplies electric power to the power reception device 12 by coming into contact with the power reception body 10 provided in the power reception device 12.

In the present embodiment, the power supply body 32 is installed on the road surface 20a of the road 20 so as to extend along the road 20. The road 20 includes a path through which the power supply target 103 passes. In the example shown in FIGS. 1 and 2, the power supply body 32 is embedded in the road 20. Further, in the example shown in FIGS. 1 and 2, an insulator 38 for insulating the road 20 from the power supply body 32 is embedded in the road 20 together with the power supply body 32. In the illustrated example, the plate-shaped power supply body 32 and the insulator 38 insulating the power supply body 32 from the road 20 are installed in a groove 24 extending along the vehicle front-rear direction VX and dug in the road surface 20a. In the present embodiment, the surface 32a of the power supply body 32 that comes into contact with the power reception body 10 is at the same height as the road surface 20a.

In the present embodiment, the vehicle 11 includes a power supply body detection device 18 for detecting the power supply body 32 to acquire the positional relationship between the vehicle 11 and the power supply body 32 in the vehicle width direction VY. The power supply body detection device 18 may be an imaging device that captures an image of an imaging range E1 including the road surface 20a, or may be a dedicated sensor that detects the power supply body 32. In the case where the power supply body detection device 18 is an imaging device, the power supply body 32 is detected, for example, by image recognition from a captured image including the road surface 20a. In the illustrated example, the power supply body detection device 18 is a front camera that captures the imaging range E1 including the road surface 20a in the front in the vehicle front-rear direction VX, but it may alternatively be a rear camera that captures an imaging range including the road surface 20a in the rear in the vehicle front-rear direction VX. The vehicle 11 on which the power reception device 12 is mounted is not particularly limited, but may be, for example, an electric vehicle that uses a rotating electric machine as a travel drive source. The rotating electric machine rotates wheels 16 by receiving electric power supplied from the power reception device 12.

As shown in FIG. 2, the vehicle 11 includes a vehicle-side power reception terminal 45. Electric power supplied to the power reception device 12 is supplied, via the vehicle-side power reception terminal 45, to electronic equipment provided in the vehicle 11 (e.g., a travel drive source, a storage battery, a control device of the vehicle 11). In the present embodiment, an attachment section 41 is fixed to a vehicle body 14 of the vehicle 11. Examples of the vehicle body 14 include a monocoque body and a ladder-frame body.

As shown in FIG. 1, the power reception device 12 includes a base member 42 attached to the vehicle 11. The base member 42 is attached to a lower surface 11b of the vehicle 11. In the present embodiment, the base member 42 is attached to the vehicle 11 via the attachment section 41. The attachment section 41 is a member extending in the vehicle width direction VY. The base member 42 is a member extending in the vehicle front-rear direction VX. Note that the base member 42 may be attached to the vehicle 11 without the attachment section 41.

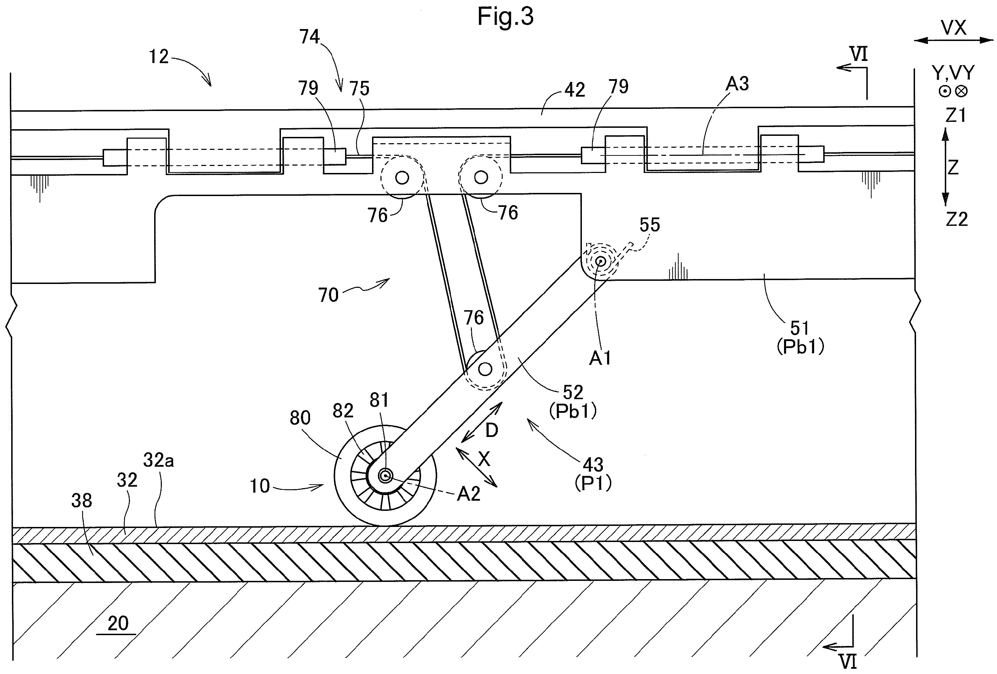

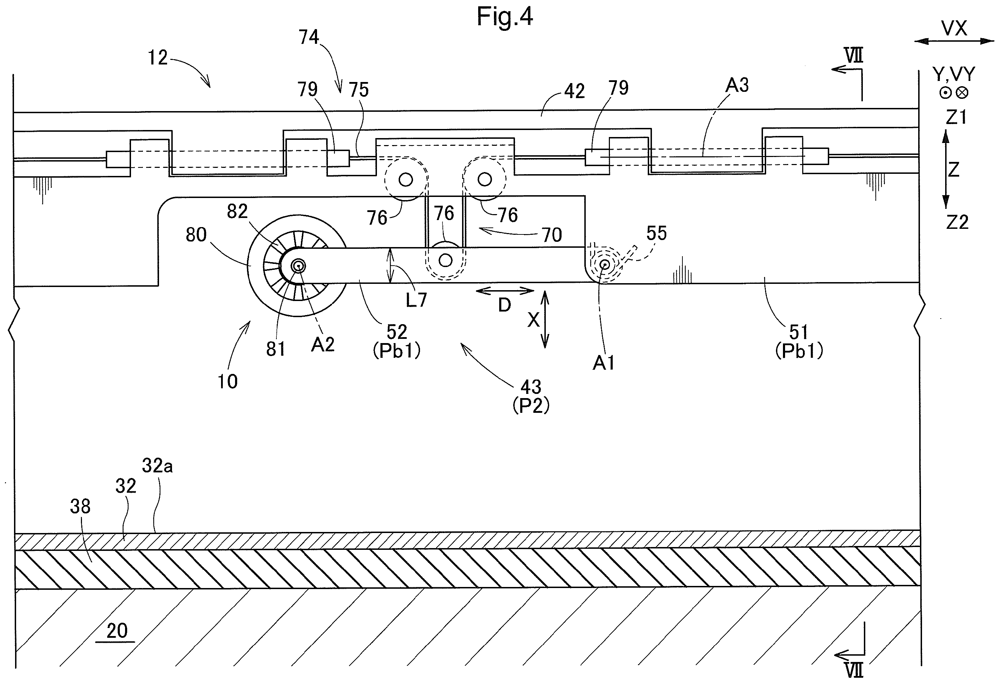

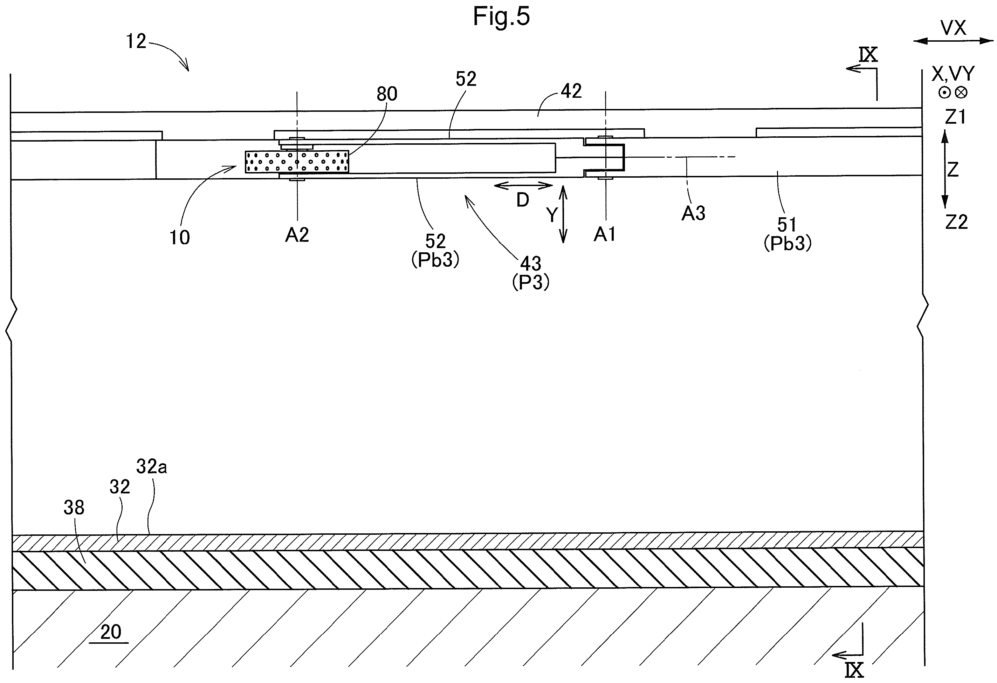

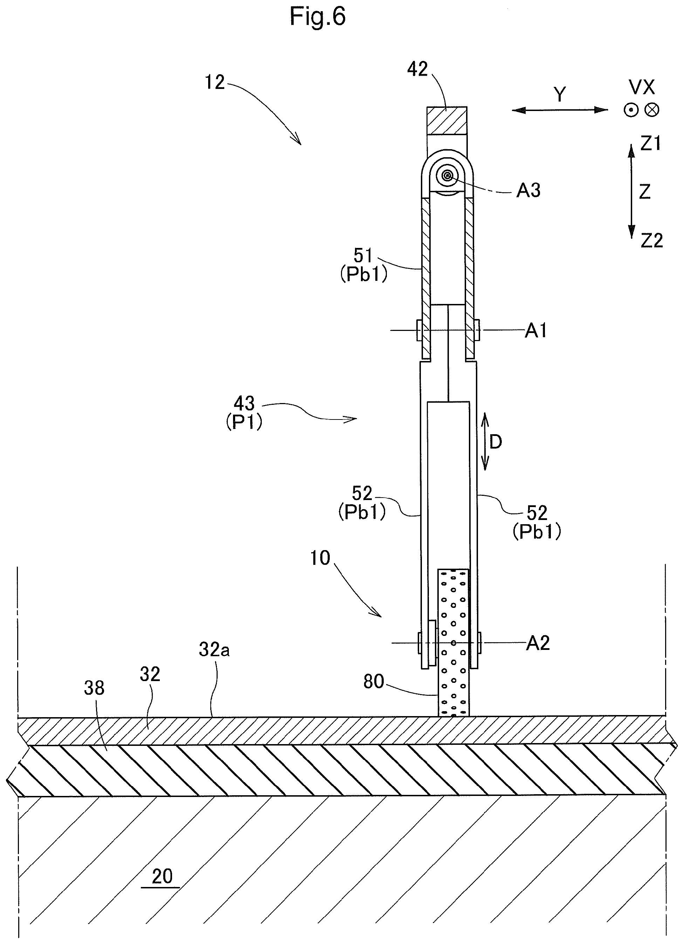

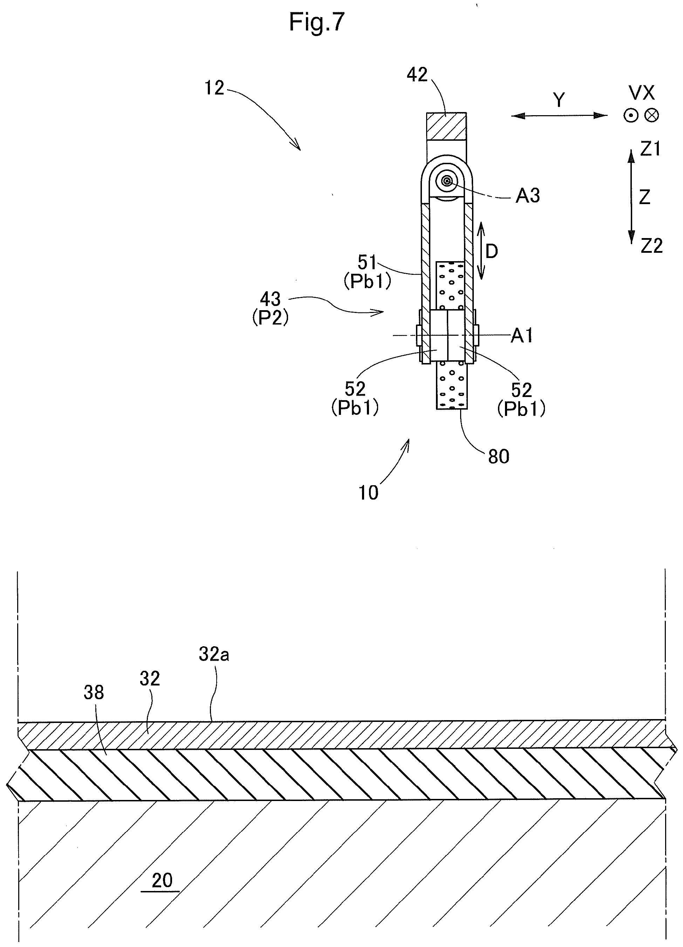

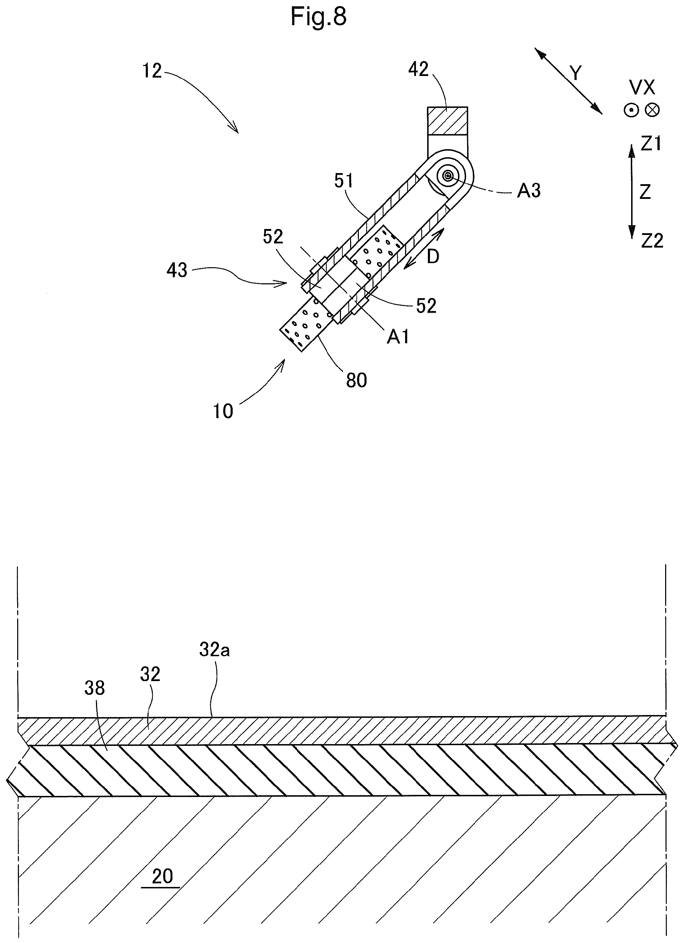

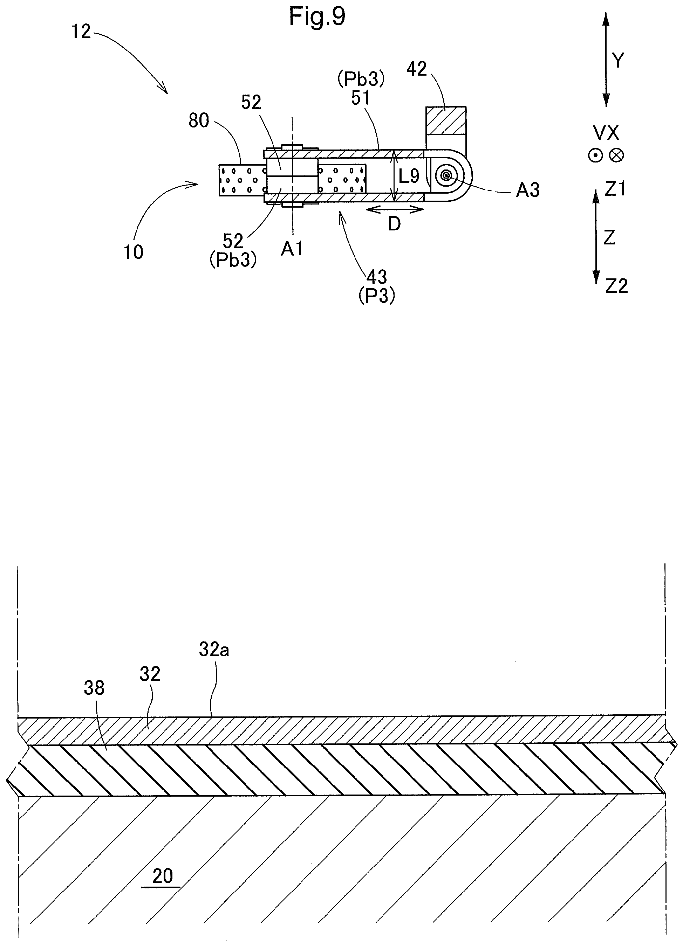

The power reception device 12 includes the power reception body 10 that comes into contact with the power supply body 32 to receive electric power. The power reception device 12 includes a coupling mechanism 43 that couples the base member 42 to the power reception body 10. FIG. 3 is a side view of the coupling mechanism 43 in a contacting orientation P1. FIG. 4 is a side view of the coupling mechanism 43 in a retracted orientation P2. FIG. 5 is a side view of the coupling mechanism 43 in a stored orientation P3. FIG. 6 is a cross-sectional view of FIG. 3, taken along line VI-VI. FIG. 7 is a cross-sectional view of FIG. 4, taken along line VII-VII. FIG. 8 is a cross-sectional view of the coupling mechanism 43 in a turning state. FIG. 9 is a cross-sectional view of FIG. 5, taken along line IX-IX.

The coupling mechanism 43 is changed in orientation by a drive mechanism 70 (described later) between the contacting orientation P1 in which the power reception body 10 is brought into contact with the power supply body 32, and the stored orientation P3 in which the power reception body 10 is spaced apart from the power supply body 32. The coupling mechanism 43 includes a coupling member 51 that couples the base member 42 to a support arm 52. The coupling member 51 is pivotably coupled to the base member 42 about a turning axis A3, which extends along a direction intersecting a pivot axis A1 in the contacting orientation P1 as viewed in the up-down direction.

The coupling mechanism 43 includes the support arm 52 that supports the power reception body 10. The coupling mechanism 43 is configured such that the power reception body 10 is suspended by the support arm 52 in the contacting orientation P1. In the present embodiment, the support arm 52 has a band shape having a rectangular cross-section, but may have another flattened member such as one having an elliptical cross-section. The support arm 52 may be a hollow member. Here, the term "hollow member" also includes members formed by stacking two or more band-shaped members with a space therebetween. Here, the term "extension direction D" refers to a direction in which the support arm 52 extends, the term "first width direction Y" refers to a direction along the pivot axis A1, and the term "thickness direction X" refers to a direction orthogonal to both the extension direction D and the first width direction Y.

In the present embodiment, the support arm 52 is pivotably coupled to the coupling member 51 about the pivot axis A1. In the contacting orientation P1, the extension direction D of the support arm 52 is inclined such that it extends to a lower side Z2 and rearward in the vehicle front-rear direction VX while approaching the power reception body 10 from the pivot axis A1, as shown in FIG. 3. In the contacting orientation P1, the pivot axis A1 extends along the vehicle width direction VY. In the contacting orientation P1, the first width direction Y is a direction along the vehicle width direction VY. In the present embodiment, in the contacting orientation P1, the first width direction Y is parallel to the vehicle width direction VY. In the stored orientation P3, the first width direction Y is a direction along the up-down direction Z. In the example shown in FIG. 5, in the contacting orientation P1, the first width direction Y is parallel to the up-down direction Z.

The coupling mechanism 43 turns the support arm 52 about the turning axis A3 along a direction intersecting the pivot axis A1 of the contacting orientation P1 as viewed in the up-down direction such that the first width direction Y of the support arm 52 extends along the horizontal direction in the contacting orientation P1, and such that the first width direction Y of the support arm 52 extends along the up-down direction Z in the stored orientation P3. Note that the first width direction Y in the contacting orientation P1 is not limited to a direction parallel to the horizontal direction and may be inclined relative to such a parallel direction. Similarly, the first width direction Y in the stored orientation P3 is not limited to a direction parallel to the up-down direction Z and may be inclined relative thereto.

In the present embodiment, the axial direction of the turning axis A3 extends along the vehicle front-rear direction VX, but it may alternatively extend along the vehicle width direction VY. In the present embodiment, the axial direction of the turning axis A3 is a horizontal direction, but it may alternatively be inclined relative to the horizontal direction. In the present embodiment, the axial direction of the turning axis A3 is a direction orthogonal to the pivot axis A1 as viewed in the up-down direction, but the axial direction of the turning axis A3 need not be strictly orthogonal as long as it is a direction intersecting the pivot axis A1. The turning of the support arm 52 may be turning of the coupling member 51 relative to the base member 42, or a bending pivot of the support arm 52 about the turning axis A3.

The power reception device 12 includes a drive mechanism 70 that changes the orientation of the coupling mechanism 43 between the contacting orientation P1, in which the power reception body 10 is brought into contact with the power supply body 32, and the stored orientation P3, in which the power reception body 10 is spaced apart from the power supply body 32. The drive mechanism 70 is capable of a turning operation to pivot the coupling member 51 and the support arm 52 about the turning axis A3 such that, in the contacting orientation P1, the power reception body 10 is suspended by the support arm 52 and the pivot axis A1 of the support arm 52 assumes a first orientation Pb1 along the horizontal direction, and such that, in the stored orientation P3, the pivot axis A1 of the support arm 52 assumes a third orientation Pb3 along the up-down direction Z.

In the present embodiment, to change the orientation of the coupling mechanism 43 from the stored orientation P3 to the contacting orientation P1, the drive mechanism 70 pivots the coupling member 51 about the turning axis A3 such that the first width direction Y of the support arm 52 assumes an orientation along the horizontal direction, and thereafter pivots the support arm 52 about the pivot axis A1 to lower the power reception body 10.

In the present embodiment, to change the orientation of the coupling mechanism 43 from the contacting orientation P1 to the stored orientation P3, the drive mechanism 70 first pivots the support arm 52 about the pivot axis A1 to raise the power reception body 10, and thereafter pivots the coupling mechanism 43 about the turning axis A3 such that the first width direction Y of the support arm 52 assumes an orientation along the up-down direction Z. FIGS. 4 and 7 illustrate the coupling mechanism 43 in a retracted orientation P2, i.e., in a state after the support arm 52 has been pivoted about the pivot axis A1 to raise the power reception body 10, and the first width direction Y of the support arm 52 assumes an orientation along the horizontal direction.

In the present embodiment, the drive mechanism 70 is capable of allowing pivoting of the support arm 52 about the pivot axis A1 relative to the coupling member 51 in the contacting orientation P1, while restricting pivoting of the coupling member 51 about the turning axis A3 relative to the base member 42 in each of the contacting orientation P1 and the stored orientation P3.

The drive mechanism 70 includes a drive device 71 (see FIG. 2) and a transmission mechanism 74 that transmits a drive force of the drive device 71 to the coupling member 51 and the support arm 52. The transmission mechanism 74 performs a lowering operation to pivot the support arm 52 about the pivot axis A1 with the drive force of the drive device 71 and lower the power reception body 10. The transmission mechanism 74 performs a raising operation to pivot the support arm 52 about the pivot axis A1 with the drive force of the drive device 71 and raise the power reception body 10. Examples of the drive device 71 include a rotating electric machine, a pneumatic pump, a hydraulic pump, and a solenoid actuator.

In the present embodiment, the transmission mechanism 74 performs a turning operation to pivot the coupling member 51 and the support arm 52 about the turning axis A3 with the drive force of the drive device 71 so as to change the orientation from the third orientation Pb3 to the first orientation Pb1. The transmission mechanism 74 also performs a turning operation to pivot the coupling member 51 and the support arm 52 about the turning axis A3 with the drive force of the drive device 71 so as to change the orientation from the first orientation Pb1 to the third orientation Pb3.

In the present embodiment, the transmission mechanism 74 sequentially performs the following operations with use of the operation of the drive device 71: an unlocking operation for canceling restriction of pivoting of the coupling member 51 about the turning axis A3 from the state of the stored orientation P3; a turning operation for pivoting the coupling member 51 and the support arm 52 about the turning axis A3 to change the orientation from the third orientation Pb3 to the first orientation Pb1 after completion of the unlocking operation; a locking operation for restricting pivoting of the coupling member 51 about the turning axis A3 after completion of the turning operation; and a lowering operation for pivoting the support arm 52 about the pivot axis A1 to lower the power reception body 10 after completion of the locking operation.

In the present embodiment, the transmission mechanism 74 sequentially performs the following operations with use of the operation of the drive device 71: a raising operation for pivoting the support arm 52 about the pivot axis A1 to raise the power reception body 10 from the state of the contacting orientation P1; an unlocking operation for canceling the restriction of pivoting of the coupling member 51 about the turning axis A3 after completion of the raising operation; a turning operation for pivoting the coupling member 51 and the support arm 52 about the turning axis A3 so as to change the orientation from the first orientation Pb1 to the third orientation Pb3 after completion of the unlocking operation; and a locking operation for restricting the pivoting of the coupling member 51 about the turning axis A3 after completion of the turning operation.

In the present embodiment, the transmission mechanism 74 includes a transmission member 75 that operates in a specific transmission direction B with the drive force of the drive device 71. In the example shown in FIG. 3, the transmission mechanism 74 includes a pulley 76. Examples of the transmission member 75 include a wire, a cable, a chain, and a gear.

In the illustrated example, the transmission mechanism 74 is disposed so as to pass inside a tubular member 79 fixed to the base member 42 or the coupling member 51. The transmission member 75 has one end fixed to the vehicle body 14, the attachment section 41, or the base member 42, and the other end pulled by the drive device 71, thereby causing the support arm 52 to pivot about the pivot axis A1 and raise the power reception body 10. The coupling mechanism 43 includes a first elastic member 55 (see FIG. 3) that biases the support arm 52 relative to the coupling member 51. The first elastic member 55 biases the support arm 52 relative to the coupling member 51 in a direction in which the power reception body 10 is lowered to come into contact with the power supply body 32. Examples of the first elastic member 55 include a coil spring, a torsion coil spring, and a leaf spring.

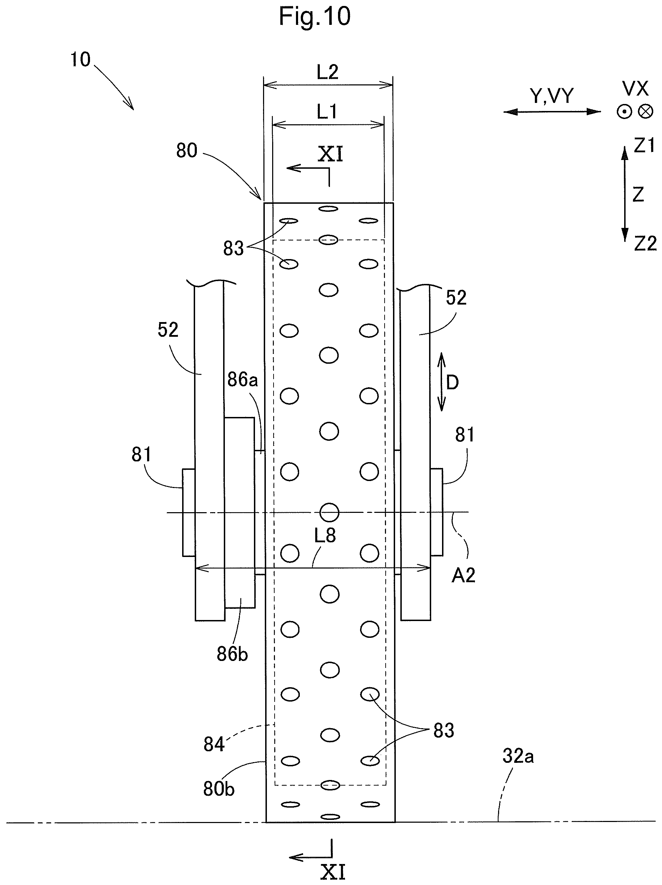

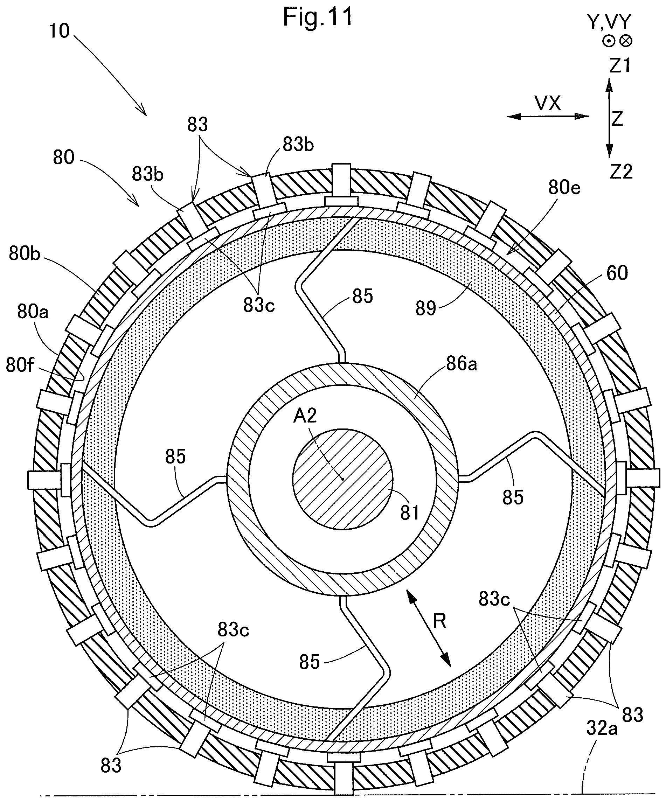

Electric power supplied from the power supply body 32 to the power reception body 10 is transmitted to the vehicle-side power reception terminal 45 (see FIG. 2) via a transmission wire (not shown). FIG. 10 is an enlarged view of the power reception body 10 of FIG. 6. FIG. 11 is a cross-sectional view of the power reception body 10 of FIG. 10, taken along line XI-XI. The power reception body 10 includes a tire 80 formed of an elastic material. Examples of the elastic material used for the tire 80 include thermosetting elastomers such as natural rubber and synthetic rubber, thermoplastic elastomers, non-conductive elastomers, and conductive elastomers.

The tire 80 has an annular tread section 80b that forms a tread surface 80a, which is an outer peripheral surface of the tire 80. The tire 80 contains an inner chamber 80e. Examples of the shape of the tread section 80b include arc shapes having rounded-rectangle cross-sections, elliptical cross-sections, and circular cross-sections, as well as cylindrical shapes and ring shapes.

The power reception body 10 rotates about a rotation axis A2. In the present embodiment, the power reception body 10 is rotatably supported about the rotation axis A2 by a shaft section 81 of the power reception device 12. The shaft section 81 is fixed to the support arm 52 and rotatably supports the power reception body 10 about the rotation axis A2 via a bearing (not shown). In the example shown in FIG. 3, the power reception body 10 includes a wheel 82 to which the tire 80 is fixed, and the wheel 82 is supported by the shaft section 81 via the bearing. Here, the term "second width direction" refers to a direction along the rotation axis A2. In the present embodiment, the second width direction in the contacting orientation P1 is a direction orthogonal to the vehicle front-rear direction VX, while the second width direction in the stored orientation P3 is a direction along the up-down direction Z. In the illustrated example, the second width direction is parallel to the first width direction Y. Accordingly, similar to the first width direction, the second width direction is indicated as Y.

The power reception body 10 includes a plurality of conductive bodies 83 that are dispersed along the tread surface 80a, which is an outer peripheral surface of the tire 80. Each of the conductive bodies 83 is disposed so as to extend through the tread section 80b. The conductive bodies 83 are dispersed not only in the circumferential direction of the tread surface 80a but also in the second width direction Y. Examples of the conductive bodies 83 include conductive studs, conductive pins, bolts, conductive threads, and conductive wires.

The power reception body 10 includes a conductive band 60 disposed in the inner chamber 80e. The conductive band 60 is a band-shaped member having conductivity and flexibility. In the present embodiment, the conductive band 60 is a knitted or woven fabric using conductive thread or conductive wire. For example, the conductive band 60 is formed by cross-knitting.

Here, the term "radial direction R" refers to a direction orthogonal to the rotation axis A2 of the tire 80. The term "inner side in the radial direction" refers to a side closer to the rotation axis A2 of the tire 80 in the radial direction R. The term "outer side in the radial direction R" refers to a side farther from the rotation axis A2 of the tire 80. The term "circumferential direction" refers to the circumferential direction of the tire 80.

The conductive band 60 is continuously disposed along the circumferential direction. In the present embodiment, the conductive band 60 is continuously disposed in the circumferential direction along an inner peripheral surface 80f of the tread section 80b. In the present embodiment, the conductive band 60 is continuously disposed over the entire circumference. Note that the conductive band 60 may be divided at one or more locations. In the present embodiment, the conductive band 60 is disposed inward of the inner peripheral surface 80f of the tread section 80b in the radial direction R, and is spaced apart therefrom. However, the conductive band 60 may alternatively be disposed in contact with the inner peripheral surface 80f of the tread section 80b. The conductive band 60 rotates integrally with the tire 80.

The conductive bodies 83 are electrically connected to the conductive band 60. In the present embodiment, a dimension L1 of the conductive band 60 in the second width direction Y is set so as to overlap the entirety of the conductive bodies 83 dispersed in the second width direction Y as viewed in the radial direction. A dimension L2 of the tire 80 in the second width direction Y is smaller than the outer diameter of the tire 80. With this configuration, in the stored orientation P3, the second width direction Y of the tire 80 extends along the up-down direction Z, thereby facilitating a reduction in the dimension of the power reception body 10 in the up-down direction Z in the stored orientation P3. In the present embodiment, in at least the third orientation Pb3, a dimension L8 of the support arm 52 in the first width direction Y (see FIG. 10) is smaller than the outer diameter of the tire 80. In the present embodiment, in at least the third orientation Pb3, a dimension L9 of the coupling member 51 in the first width direction Y (see FIG. 9) is smaller than the outer diameter of the tire 80. In the example shown in FIG. 11, the dimension of the shaft section 81 in the second width direction Y is smaller than the outer diameter of the tire 80.

In the present embodiment, in at least the third orientation Pb3, a dimension L7 of the support arm 52 in the thickness direction X (see FIG. 4) is larger than the dimension L8 of the support arm 52 in the first width direction Y (see FIG. 10). In the present embodiment, in at least the third orientation Pb3, the dimension L7 of the support arm 52 in the thickness direction X (see FIG. 4) is larger than the dimension L9 of the coupling member 51 in the first width direction Y (see FIG. 9). With this configuration, the first width direction Y in the stored orientation P3 extends along the up-down direction Z, thereby making it possible to increase the strength of the support arm 52 while keeping small the dimension of the power reception device 12 in the up-down direction Z in the stored orientation P3.

The power reception body 10 includes a rotary terminal 86a that is disposed inward of the conductive band 60 in the radial direction R and rotates integrally with the tire 80. The rotary terminal 86a is electrically connected to a fixed terminal 86b of the power reception device 12. The fixed terminal 86b receives electric power from the rotary terminal 86a and transmits the power to the vehicle-side power reception terminal 45 (see FIG. 2) via a transmission wire (not shown). In the illustrated example, the fixed terminal 86b is fixed to the support arm 52. Examples of the rotary terminal 86a include a rotating-side member of a slip ring and a rotating-side member of a rotary connector. Examples of the fixed terminal 86b include a fixed-side member of a slip ring and a fixed-side member of a rotary connector.

The power reception body 10 includes conductive wires 85 that electrically connect the conductive band 60 and the rotary terminal 86a. In the power reception body 10 of the present embodiment, the conductive band 60 and the rotary terminal 86a are connected by N conductive wires 85 (where N is an integer of one or greater). In the present embodiment, the conductive band 60 electrically connects all of the N conductive wires 85 to each other. In the present embodiment, a total cross-sectional area of the N conductive wires 85 is set in accordance with the magnitude of the current received from the power supply body 32. The total cross-sectional area of the N conductive wires 85 is set, for example, to an area corresponding to a current of at least one time, or at least 1.2 times, or at least 1.5 times the required reception current. The total cross-sectional area of the N conductive wires 85 is set, for example, to an area corresponding to a current of less than 1.5 times, or less than 2 times, or less than 3 times the required reception current.

The number of conductive wires 85 electrically connected to the conductive band 60 is one-half or less, or one-third or less, or one-fourth or less of the number of conductive bodies 83 electrically connected to the conductive band 60. The number of conductive wires 85 is 32 or less, or 24 or less, or 16 or less, or 8 or less, or 4 or less. The number of conductive wires 85 is two or more, or three or more, or four or more. Note that the number of conductive wires 85 may also be the same as the number of conductive bodies 83. Examples of the conductive wires 85 include conductive wire, conductive thread, conductive knitted fabric, and conductive woven fabric.

As shown in FIG. 11, each conductive body 83 extends through a through-hole formed in the tread section 80b so as to be movable in the radial direction R with respect to the tread section 80b. This facilitates suppression of noise and wear caused by contact with the power supply body 32.

Each conductive body 83 has a column-shaped section 83b. Each conductive body 83 also has a locked section 83c. The conductive body 83 has a portion larger than the diameter of the through-hole at an inner end portion in the radial direction R. This end portion corresponds to the locked section 83c. The conductive body 83 can be prevented from coming off the tire 80 due to having the locked section 83c. In the illustrated example, the locked section 83c of the conductive body 83 is a head portion having an outer diameter larger than the diameter of the through-hole. However, the locked section 83c may alternatively have a T-shape or an L-shape.

The locked section 83c of each conductive body 83 is disposed between the conductive band 60 and the inner peripheral surface 80f of the tread section 80b. The conductive band 60 is in contact with the conductive body 83 so as to press the conductive body 83 outward in the radial direction R. In the present embodiment, a pressure member 89 is provided inward of the conductive band 60 in the radial direction R to press the conductive band 60 into contact with the conductive body 83. The pressure member 89 rotates integrally with the tire 80. The pressure member 89 is disposed in the inner chamber 80e. In the present embodiment, the conductive band 60 and the pressure member 89 are not fixed to each other. The conductive band 60 is in contact with the locked section 83c but is not fixed thereto.

In the present embodiment, the locked section 83c of each conductive body 83 and the conductive band 60 can be separated from each other in the radial direction R, and are maintained in a contacting state due to pressure from the pressure member 89. Note that the pressure member 89 may be omitted, and the conductive body 83 and the conductive band 60 may alternatively be fixed to each other by fastening, welding, or thermal spraying to be electrically connected. Examples of the pressure member 89 include a flexible container enclosing gel, liquid, gas, or the like, a flexible porous material, a non-conductive elastomer; a conductive elastomer, and a coil spring.

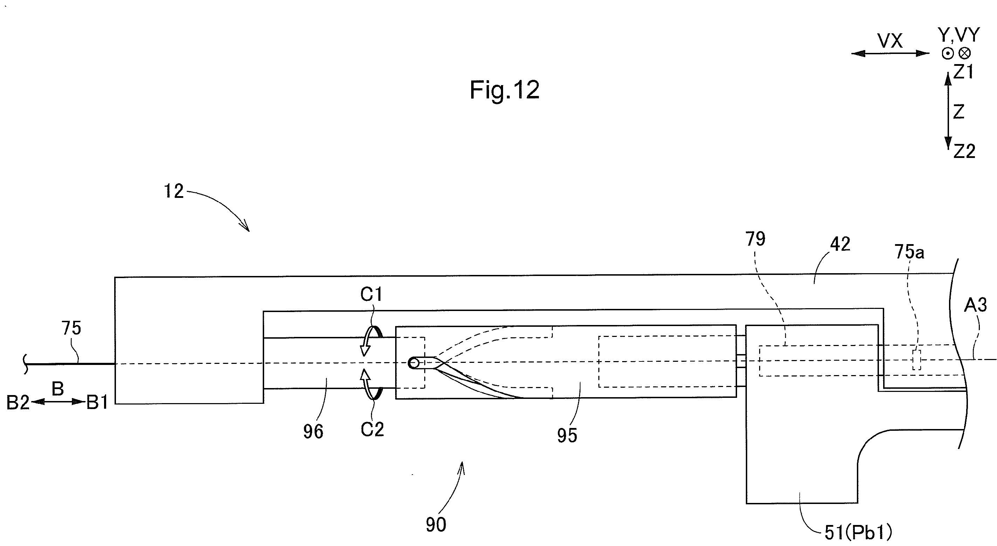

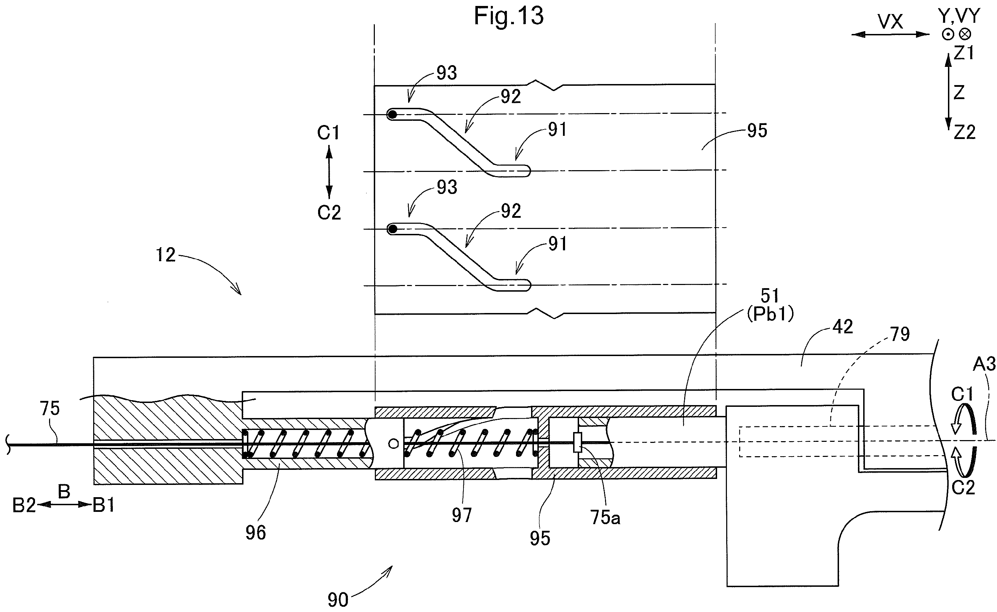

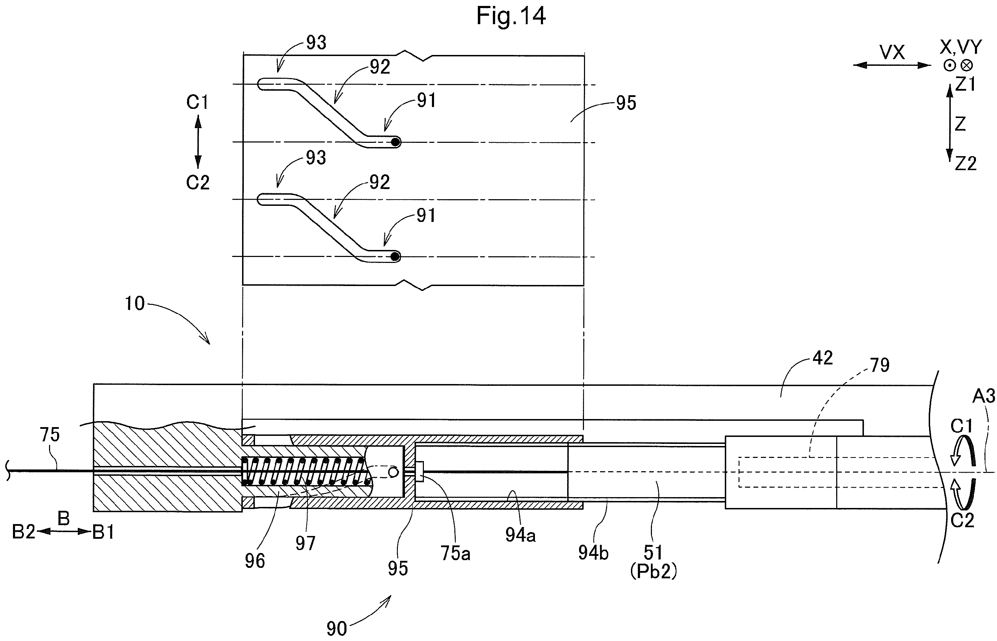

FIG. 12 is a side view of a cam mechanism 90 with the coupling mechanism 43 in the contacting orientation P1. FIG. 13 is a cross-sectional view of the cam mechanism 90 with the coupling mechanism 43 in the contacting orientation P1. FIG. 14 is a cross-sectional view of the cam mechanism 90 with the coupling mechanism 43 in the stored orientation P3. The transmission mechanism 74 includes the cam mechanism 90 that converts the operation of the transmission member 75 into the operation of the coupling member 51 and the support arm 52. Examples of the cam mechanism 90 include three-dimensional cam mechanisms such as cylindrical cams, and planar cam mechanisms such as plate cams.

In the present embodiment, the cam mechanism 90 includes a first cam member 95 and a second cam member 96. The first cam member 95 is connected to the coupling member 51 so as not to be pivotable about the turning axis A3. The first cam member 95 is connected to the coupling member 51 so as to be movable in the axial direction of the turning axis A3. The first cam member 95 is connected to the second cam member 96 so as to be pivotable about the turning axis A3. The second cam member 96 is fixed to the base member 42. In the example shown in FIG. 13, a groove section 94a extending in the axial direction of the turning axis A3 is formed on an inner peripheral surface of the first cam member 95, and a protrusion 94b that fits to the groove section 94a is formed on an outer peripheral surface of the coupling member 51. Thus, the first cam member 95 is connected to the coupling member 51 so as not to be pivotable about the turning axis A3 but to be movable in the axial direction of the turning axis A3.

In the present embodiment, the cam mechanism 90 includes a second elastic member 97 that stores a drive force of the drive device 71. The second elastic member 97 biases the first cam member 95 toward the second cam member 96. Examples of the second elastic member 97 include a coil spring, a torsion coil spring, and a leaf spring. Note that FIGS. 12 and 13 show a developed view of the first cam member 95.

The transmission member 75 operates toward a first side B1 in the transmission direction B, which is one side in the transmission direction B, within a predetermined first operation region, thereby operating the cam mechanism 90. The transmission member 75 operates toward the first side B1 in the transmission direction B within a second operation region that is located on the first side B1 in the transmission direction B relative to the first operation region, thereby pivoting the support arm 52 about the pivot axis A1 to lower the power reception body 10.

The transmission member 75 operates toward a second side B2 in the transmission direction B, which is the other side in the transmission direction B, within the predetermined first operation region, thereby operating the cam mechanism 90. The transmission member 75 operates toward the second side B2 in the transmission direction B within the second operation region located on the first side B1 in the transmission direction B relative to the first operation region, thereby pivoting the support arm 52 about the pivot axis A1 to raise the power reception body 10.

In the present embodiment, the cam mechanism 90 is operated by a cam contact section 75a fixed to the transmission member 75 being locked to the first cam member 95. The first operation region is a region in which the cam contact section 75a is locked to the first cam member 95. The second operation region is a region in which the cam contact section 75a is not locked to the first cam member 95.

Here, the term "first side C1 in the cam operation direction" refers to one side in a cam operation direction in the cam mechanism 90, and the term "second side C2 in the cam operation direction" refers to one side in the cam operation direction. Examples of the cam operation include a rotational operation of a cylindrical cam, a rotational operation of a plate cam, and a linear operation of a plate cam or the like. In the illustrated example, the cam operation direction of the first cam member 95 is a pivoting operation about the turning axis A3 relative to the second cam member 96.

The cam mechanism 90 operates toward the first side C1 in the cam operation direction in response to the transmission member 75 operating toward the first side B1 in the transmission direction in the first operation region. The cam mechanism 90 operates toward the second side C2 in the cam operation direction in response to the transmission member 75 operating toward the second side B2 in the transmission direction in the first operation region.

The cam mechanism 90 includes a first cam region 91, a second cam region 92, and a third cam region 93, each having a different cam profile. The second cam region 92 is located on the first side C1 in the cam operation direction relative to the first cam region 91. The third cam region 93 is located on the first side C1 in the cam operation direction relative to the second cam region 92.

The first cam region 91 is configured to restrict pivoting of the coupling member 51 about the turning axis A3 and maintain the coupling member 51 in the third orientation Pb3. The second cam region 92 is configured to pivot the coupling member 51 about the turning axis A3 from the third orientation Pb3 to the first orientation Pb1 in response to the operation of the cam mechanism 90 toward the first side C1 in the cam operation direction. The second cam region 92 is configured to pivot the coupling member 51 about the turning axis A3 from the first orientation Pb1 to the third orientation Pb3 in response to the operation of the cam mechanism 90 toward the second side C2 in the cam operation direction. The third cam region 93 is configured to restrict pivoting of the coupling member 51 about the turning axis A3 and maintain the coupling member 51 in the first orientation Pb1.

Returning to FIGS. 1 and 2, the power reception device 12 includes a plurality of (three in the illustrated example) power reception bodies 10. The power reception device 12 includes a plurality of (three in the illustrated example) coupling mechanisms 43. In the present embodiment, the power reception bodies 10 are disposed at multiple separate locations in the vehicle front-rear direction VX. Note that the power reception bodies 10 may alternatively be disposed at multiple separate locations in both the vehicle front-rear direction VX and the vehicle width direction VY.

The drive mechanism 70 uses one drive device 71 to change the orientation of the plurality of coupling mechanisms 43 between the contacting orientation P1 and the stored orientation P3. In the present embodiment, the drive device 71 and the transmission member 75 are provided in common to the plurality of coupling mechanisms 43, and the cam mechanism 90 is provided in correspondence with each of the plurality of coupling mechanisms 43. Preferably, one drive device 71 serves as one drive source.

The power reception device 12 includes a movement mechanism 99 that moves the coupling mechanism 43 and the power reception body 10 in the vehicle width direction VY relative to the vehicle 11. In the present embodiment, the movement mechanism 99 moves the base member 42 in the vehicle width direction VY relative to the attachment section 41. Note that the movement mechanism 99 may alternatively move the coupling mechanism 43 and the power reception body 10 in both the vehicle width direction VY and the vehicle front-rear direction VX, i.e., diagonally with respect to the vehicle width direction VY. Examples of the movement mechanism 99 include mechanisms using worm gears or belts.

In the present embodiment, while the coupling mechanism 43 is in the stored orientation P3, the entirety of both the coupling mechanism 43 and the power reception body 10 is disposed within a region overlapping the vehicle body 14 in the vehicle width direction VY, as viewed in the up-down direction. While the coupling mechanism 43 is in the stored orientation P3, the entirety of both the coupling mechanism 43 and the power reception body 10 is disposed within a region overlapping the vehicle body 14 in the vehicle front-rear direction VX, as viewed in the up-down direction. Note that the coupling mechanism 43 may be configured such that, while in the stored orientation P3, the lower end of the coupling mechanism 43 is located on the upper side Z1 of the lower end of the vehicle body 14. The power reception body 10 may be configured such that, while the coupling mechanism 43 is in the stored orientation P3, the lower end of the power reception body 10 is located on the upper side Z1 of the lower end of the vehicle body 14. While the coupling mechanism 43 is in the stored orientation P3, the coupling mechanism 43 and the power reception body 10 are, for example, located between the storage battery of the vehicle 11 and the road surface 20a.

As described above, the power reception body 10 of the present embodiment includes: a tire 80 formed of an elastic material and contains an inner chamber 80e; a conductive band 60 disposed in the inner chamber 80e; a plurality of conductive bodies 83 dispersed along the tread surface 80a, which is the outer peripheral surface of the tire 80; a rotary terminal 86a disposed inward of the conductive band 60 in the radial direction R and configured to rotate integrally with the tire 80; and a conductive wire 85 that electrically connects the conductive band 60 and the rotary terminal 86a. The tire 80 has an annular tread section 80b forming the tread surface 80a. The conductive band 60 is a band-shaped member having conductivity and flexibility, continuously disposed in the circumferential direction along an inner peripheral surface 80f of the tread section 80b. Each of the plurality of conductive bodies 83 is disposed to extend through the tread section 80b and is electrically connected to the conductive band 60.

With the above power reception body 10, each of the conductive bodies 83 dispersed along the tread surface 80a of the tire 80 is disposed to extend through the tread section 80b. Thus, even while the tire 80 is rotating, a portion of one of the conductive bodies 83 that is exposed in the tread surface 80a comes into contact with the power supply body 32, enabling power reception from the power supply body 32. Each of the conductive bodies 83 is electrically connected to the conductive band 60, and the conductive band 60 is connected to the rotary terminal 86a via the conductive wire 85. Thus, the number of conductive wires 85 can be easily kept small compared to the case where each of the conductive bodies 83 is individually connected to the rotary terminal 86a via a conductive wire 85. Therefore, elastic deformability of the tire 80 can be easily ensured. In addition, the power reception body 10 can be easily reduced in weight. Furthermore, since the conductive band 60 is a band-shaped member having flexibility and disposed in the inner chamber 80e of the tire 80, elastic deformability of the tire 80 can be easily ensured while allowing a large number of conductive bodies 83 to be connected to the conductive band 60.

In the power reception body 10 of the present embodiment, the conductive band 60 is a knitted fabric or a woven fabric using conductive thread or conductive wire.

With the above power reception body 10, high conductivity and flexibility of the conductive band 60 can be easily ensured.

In the power reception body 10 of the present embodiment, the plurality of conductive bodies 83 are dispersed not only in the circumferential direction of the tread surface 80a but also in the width direction (the second width direction Y) of the tread surface 80a. The dimension L1 of the conductive band 60 in the width direction (the second width direction Y) is set so as to overlap the entirety of the conductive bodies 83 dispersed in the width direction (the second width direction Y) as viewed in the radial direction.

With the above power reception body 10, the conductive bodies 83 are dispersed not only in the circumferential direction of the tread surface 80a but also in the width direction of the tread surface 80a. This facilitates securing a large amount of electric power received with the conductive bodies 83. Further, with this configuration, the dimension L1 of the conductive band 60 in the width direction (the second width direction Y) is set so as to overlap the entirety of the conductive bodies 83 dispersed in the width direction (the second width direction Y) as viewed in the radial direction. This makes it possible to easily connect all of the conductive bodies 83 to the conductive band 60.

In the power reception body 10 of the present embodiment, the conductive band 60 and the rotary terminal 86a are connected by N conductive wires 85 (where N is an integer of 1 or greater). The conductive band 60 electrically connects all of the N conductive wires 85 to each other. The total cross-sectional area of the N conductive wires 85 is set in accordance with the magnitude of the current received from the power supply body 32.

With the above power reception body 10, required current is allowed to flow by all the N conductive wires 85 that are connected to each other by the conductive band 60. This facilitates keeping the cross-sectional area of each conductive wire 85 small. Therefore, it is easy to ensure elastic deformability of the tire 80 and to reduce the weight of the power reception body 10.

### [Second Embodiment]

A power reception body 10 according to the second embodiment will be described below with reference to the drawings. The following description will focus mainly on differences from the first embodiment. Points not specifically described are the same as in the first embodiment.

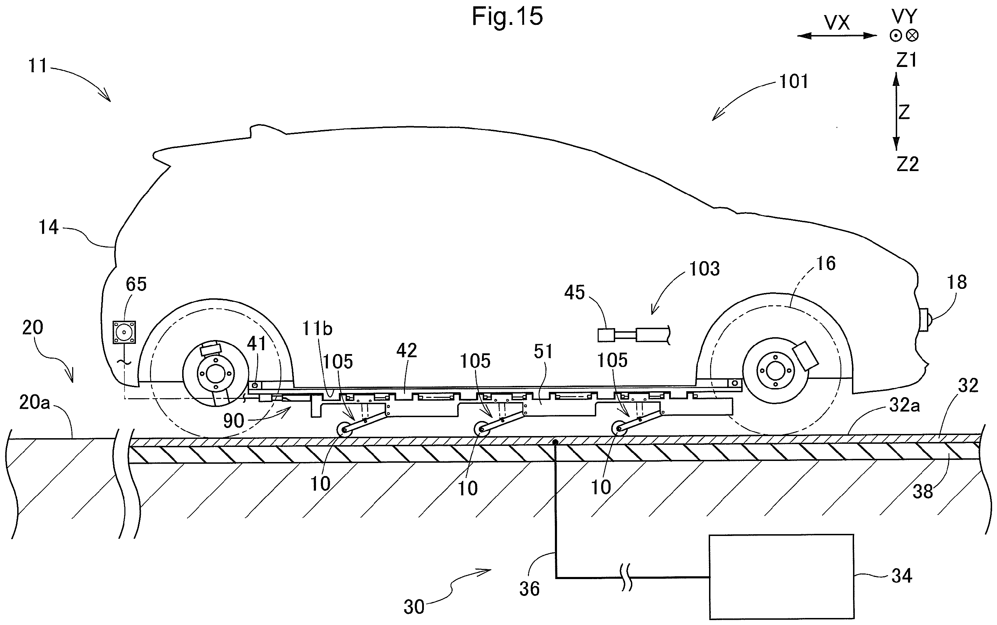

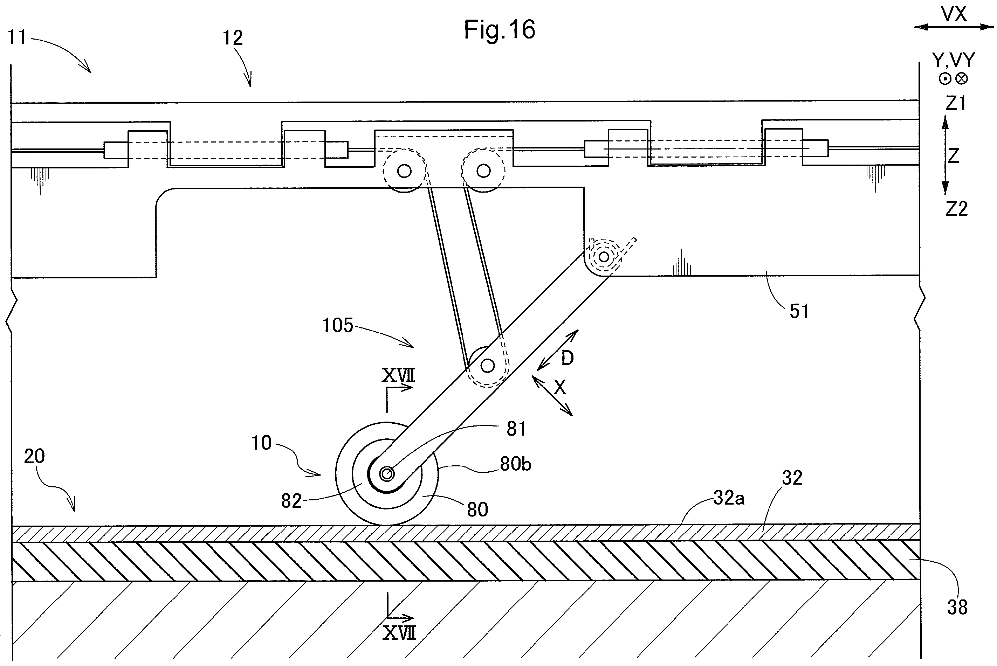

As shown in FIGS. 15 and 16, the power reception body 10 is provided in a power supply system 101 that supplies electric power to a moving power supply target 103.

The power supply system 101 includes a power supply facility 30 that supplies electric power, the power supply target 103 that receives electric power supplied from the power supply facility 30, and the power reception body 10. The power reception body 10 forms a conductive path for supplying electric power from the power supply facility 30 to the power supply target 103.

In the present embodiment, the power supply facility 30 includes a power source 34 and a power supply body 32. The power source 34 includes a system capable of supplying electric power, such as a battery, a commercial power grid, or a private power generation device. The power supply body 32 includes members that form a path through which current from the power source 34 flows, such as rails and cables. In the present embodiment, the power supply body 32 is connected to the power source 34 via an electric wire 36 to receive electric power.

In the present embodiment, the power supply body 32 is installed on a road surface 20a of a road 20 so as to extend along the road 20. The road 20 includes a path through which the power supply target 103 passes. In the example shown in FIGS. 15 and 16, the power supply body 32 is embedded in the road 20, and has a surface 32a located at the same height as the road surface 20a. Further, in the example shown in FIGS. 15 and 16, an insulator 38 for insulating the road 20 from the power supply body 32 is embedded in the road 20 together with the power supply body 32.

The power supply target 103 moves along the road 20 while receiving electric power supplied from the power supply body 32. In the present embodiment, the power supply target 103 is an electrical or electronic device mounted on the vehicle 11 that travels on the road 20. Examples of such electrical or electronic devices include a travel drive source, a storage battery, and a control device of the vehicle 11. In the example shown in FIG. 15, the power supply target 103 moves along the road 20 at a position above the road surface 20a.

In the present embodiment, the power reception body 10 forms a conductive path from the power source 34 to the power supply target 103 by coming into contact with the power supply body 32. The power reception body 10 moves together with the power supply target 103. Accordingly, the power supply system 101 further includes a connection mechanism 105 that connects the power reception body 10 to the power supply target 103.

The connection mechanism 105 forms a portion of a conductive path from the power supply facility 30 to the power supply target 103 and holds the power reception body 10. The connection mechanism 105 illustrated in FIGS. 15 and 16 is attached to a lower surface 11b of the vehicle 11. In the present embodiment, the connection mechanism 105 electrically connects the power supply target 103 and the power reception body 10, and rotatably holds the power reception body 10. As shown in FIG. 16, the connection mechanism 105 of the present embodiment places the power reception body 10 at a position in contact with the power supply body 32 when forming the conductive path from the power supply facility 30 to the power supply target 103. Meanwhile, although not illustrated, the connection mechanism 105 of the present embodiment places the power reception body 10 at a position spaced apart from the power supply body 32 when the power supply target 103 does not receive electric power supplied from the power supply facility 30.

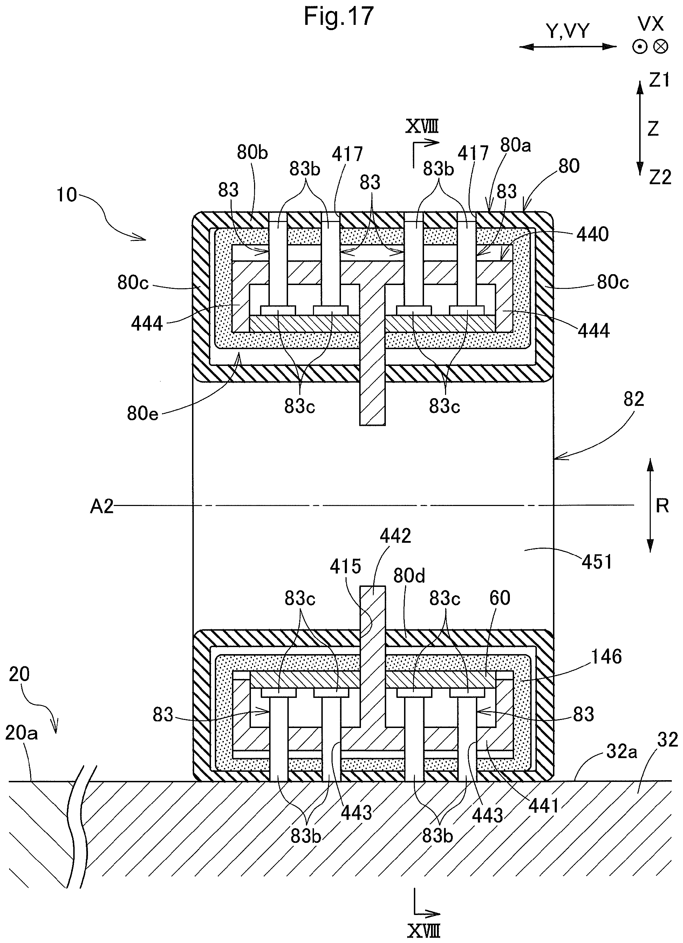

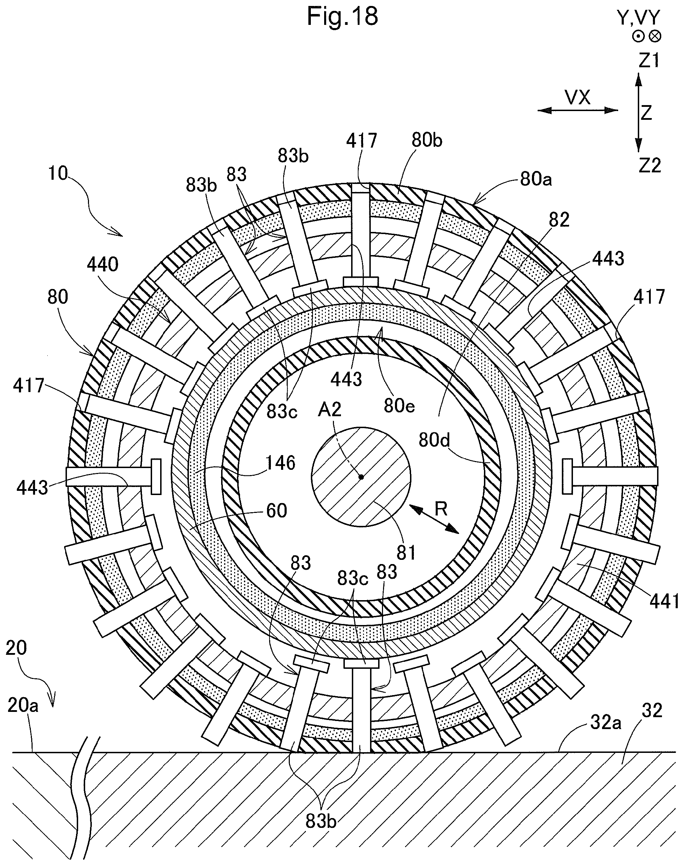

A structure of the power reception body 10 of the present embodiment will be described with reference to FIGS. 16 to 18. FIGS. 17 and 18 show the power reception body 10 in contact with the power supply body 32 in a stationary state.

The power reception body 10 rolls on the surface 32a of the power supply body 32 to receive the electric power supplied from the power supply body 32. In the present embodiment, the surface 32a on which the power reception body 10 rolls is an upper surface of the power supply body 32.

As shown in FIGS. 17 and 18, the power reception body 10 includes a tire 80 that rolls on the surface 32a of the power supply body 32, a conductive band 60, a plurality of conductive bodies 83, a restriction member 440, and a wheel 82. The conductive band 60 is movably disposed inside the tire 80 and is electrically connected to the connection mechanism 105. Each conductive body 83 is movable in a direction approaching the conductive band 60 and in a direction away from the conductive band 60, and is electrically connected to both the power supply body 32 and the conductive band 60. The restriction member 440 restricts movement of the conductive band 60 and the conductive bodies 83. The wheel 82 rotatably supports the tire 80 relative to the power supply target 103. In the present embodiment, the power reception body 10 further includes a filler member 146 disposed inside the tire 80.

The following description of the power reception body 10 is based on the directions relative to the tire 80. The term "third width direction" refers to a direction orthogonal to the radial direction R. The term "inner side in the third width direction" refers to the side closer to the tire 80 in the "third width direction". In the illustrated example, the third width direction is parallel to the second width direction. Therefore, similar to the second width direction, the third width direction is denoted as Y.

The tire 80 has a tread section 80b and sidewall sections 80c as viewed from the outside. The tread section 80b is annular and forms a tread surface 80a, which is an outer peripheral surface of the tire 80. In the present embodiment, the tread section 80b has a cylindrical shape. The sidewall sections 80c extend inward in the radial direction R from respective ends of the tread section 80b in the third width direction Y, and form side portions of the tire 80. In the present embodiment, the tire 80 further includes an inner-diameter wall section 80d. The inner-diameter wall section 80d illustrated in FIG. 17 extends inward in the third width direction Y from inner ends of the sidewall sections 80c in the radial direction R.

The tire 80 has an inner chamber 80e formed therein. The conductive band 60 and a portion of the restriction member 440 are disposed in the inner chamber 80e. In the present embodiment, the inner chamber 80e is a space surrounded by the tread section 80b and the sidewall sections 80c. In addition, in the present embodiment, the inner chamber 80e is covered by the inner-diameter wall section 80d from the inner side in the radial direction R. The inner-diameter wall section 80d illustrated in FIGS. 17 and 18 includes an opening 415 that allows communication between the inner chamber 80e and an external space of the tire 80.

The tire 80 is formed of an elastic material. Examples of elastic materials used for the tire 80 include thermosetting elastomers such as natural rubber and synthetic rubber, thermoplastic elastomers, non-conductive elastomers, non-conductive rubber, and other polymer materials. Preferably, the tire 80 is formed of a non-conductive material.

The conductive band 60 is continuously disposed along the circumferential direction. In the present embodiment, the conductive band 60 is continuously disposed in the circumferential direction along an inner peripheral surface 80f of the tread section 80b. In the present embodiment, the conductive band 60 is continuously disposed over the entire circumference. Note that the conductive band 60 may alternatively be divided at one or more locations.

The conductive band 60 includes a band-shaped member having conductivity and flexibility. In the present embodiment, the conductive band 60 is formed in a band shape by combining a plurality of conductive threads, conductive wires, or other electric wires 36. The conductive band 60 may be either a knitted fabric or a woven fabric. For example, the conductive band 60 is formed by cross-knitting a plurality of conductive wires.

The plurality of conductive bodies 83 are dispersed along the tread surface 80a. In the present embodiment, the conductive bodies 83 are dispersed not only in the circumferential direction of the tread surface 80a but also in the third width direction Y. Each of the conductive bodies 83 is disposed so as to extend through the tread section 80b. Thus, in the present embodiment, the tread section 80b has first through-holes 417 extending therethrough in the radial direction R. The conductive bodies 83 illustrated in FIGS. 17 and 18 are inserted into the first through-holes 417 so as to be movable in the radial direction R.

The conductive bodies 83 are electrically connected to the power supply body 32 and the conductive band 60. Thus, the conductive band 60 and the conductive bodies 83 form a conductive path from the power supply body 32 to the power supply target 103. In the present embodiment, the conductive bodies 83 form the conductive path between the power supply body 32 and the power supply target 103 by coming into contact with both the power supply body 32 and the conductive band 60. In the example shown in FIGS. 17 and 18, the conductive body 83 placed at a position closest to the surface 32a of the power supply body 32 forms the conductive path from the power supply body 32 to the power supply target 103. A portion of this conductive body 83 that is located outside the tire 80 is in contact with the power supply body 32, and a portion located in the inner chamber 80e is in contact with the conductive band 60. Examples of the conductive bodies 83 include conductive studs, conductive pins, bolts, and other conductive members.

Each conductive body 83 has a column-shaped section 83b and a locked section 83c. In the present embodiment, the conductive body 83 has a rivet shape. The column-shaped section 83b corresponds to a shaft portion of the rivet shape. The locked section 83c corresponds to a head portion of the rivet shape.

The column-shaped section 83b extends through the restriction section 441 and the tread section 80b in the radial direction R. In the present embodiment, the column-shaped section 83b has a cylindrical shape. Note that the shape of the column-shaped section 83b is not limited to a cylindrical shape, and may alternatively be a rectangular column shape having a rectangular cross-section or a column shape having any other polygonal cross-section, or a shape in which the diameter varies along its length direction, such as one having a stepped portion along its longitudinal direction. The column-shaped section 83b shown in FIGS. 17 and 18 is inserted into the first through-hole 417 formed in the tread section 80b. With such a configuration, the tread section 80b can restrict movement of the conductive body 83 in the circumferential direction and in the third width direction Y.

The locked section 83c is located inward of the tread section 80b in the radial direction R and is electrically connected to the conductive band 60. In the present embodiment, the locked section 83c is provided inward of the column-shaped section 83b in the radial direction R and has a dimension in at least either the third width direction Y or the circumferential direction that is larger than that of the column-shaped section 83b. The locked section 83c illustrated in FIGS. 17 and 18 is formed at an inner end of the conductive body 83 in the radial direction R, and has dimensions in both the third width direction Y and the circumferential direction that are larger than those of the column-shaped section 83b. Additionally, in the present embodiment, the conductive band 60 is disposed so as to come into contact with the locked section 83c from the inner side in the radial direction R. A conductive path is formed as a result of the locked section 83c coming into direct contact with the conductive band 60.

The restriction member 440 has a restriction section 441 and a coupling section 442 that couples the restriction section 441 to the wheel 82. The restriction section 441 is disposed in the inner chamber 80e. In the present embodiment, the coupling section 442 extends inward in the radial direction R from the restriction section 441 and passes through the opening 415 in the inner-diameter wall section 80d so as to be exposed to the outside of the inner chamber 80e.

The restriction section 441 is disposed outward of the conductive band 60 and the locked sections 83c in the radial direction R, and restricts outward movement of the conductive band 60 and the conductive bodies 83 in the radial direction R. In the example shown in FIGS. 17 and 18, the restriction section 441 is spaced apart outward of the conductive band 60 and the plurality of locked sections 83c in the radial direction R. Note that a portion of the restriction section 441 may be disposed outside the inner chamber 80e as long as the restriction section 441 is disposed in the inner chamber 80e.

In the present embodiment, the restriction section 441 has an annular shape with an outer peripheral surface facing the inner peripheral surface 80f of the tread section 80b, and has a plurality of second through-holes 443 that penetrate in the radial direction R. In the example shown in FIGS. 17 and 18, the restriction section 441 has a cylindrical shape having edge portions 444 that extend inward in the radial direction R at both ends in the third width direction Y.

Each of the second through-holes 443 is formed at a portion other than the edge portions 444 so as to be located at a position where the second through-hole 443 is in communication with a corresponding one of the first through-holes 417 formed in the tread section 80b. Each second through-hole 443 is formed such that the dimension in at least either the third width direction Y or the circumferential direction is smaller than that of the locked section 83c. In the example shown in FIGS. 17 and 18, the dimensions of each second through-holes 443 in both the third width direction Y and the circumferential direction are smaller than those of the locked section 83c. Therefore, if the locked section 83c moves outward in the radial direction R, it is caught by the inner peripheral surface of the restriction section 441. Thus, the restriction section 441 restricts outward movement of the entire conductive body 83 in the radial direction R.

With such a configuration, the distance from the surface of the restriction section 441 that restricts the movement of the conductive body 83 in the radial direction R to the tread surface 80a is shorter. In the example shown in FIGS. 17 and 18, the distance from the inner peripheral surface of the restriction section 441 to the tread surface 80a is shorter. Accordingly, the spacing between positions where the conductive bodies 83 protrude from the tread surface 80a can be reduced.

In the present embodiment, while no load acts on the tread section 80b, the restriction section 441 is disposed so as to be spaced apart inward of the tread section 80b in the radial direction R and spaced apart outward of the conductive band 60 and the locked sections 83c in the radial direction R. Note that while the tread section 80b is deformed by a load, the restriction section 441 need not remain spaced apart from the conductive band 60 and the locked sections 83c. For example, the conductive bodies 83 come into contact with the restriction section 441 in response to the tire 80 rotating to cause centrifugal force to act on the conductive bodies 83, as described later.

The restriction member 440 is formed of a material having sufficient rigidity to suppress deformation of the tire 80 caused by centrifugal force acting on the conductive bodies 83. Examples of such materials include synthetic resins, aluminum, and other metals.

The wheel 82 supports the tire 80 from the inner side in the radial direction R. In the example shown in FIG. 16, the wheel 82 is rotatably supported by the connection mechanism 105. The wheel 82 rotates due to friction generated between the power supply body 32 and the tire 80 by the movement of the vehicle 11. In the present embodiment, the wheel 82 has a body section 451 and a shaft section 81.

The body section 451 is fixed to at least either the sidewall section 80c or the inner-diameter wall section 80d. The body section 451 illustrated in FIGS. 17 (with part omitted) and 18 is disk-shaped and is fixed to the inner-diameter wall section 80d. Note that the shape of the body section 451 is not limited to a disk shape, and may have any shape as long as it can support the tire 80 from the inner side in the radial direction R.
For example, the body section 451 may be formed of a plurality of spokes extending radially from the rotation center, or may be formed by combining multiple members.

The shaft section 81 is a rotatably supported portion. In the present embodiment, the shaft section 81 is a shaft extending from the body section 451 along the rotation axis A2 of the tire 80. In the example shown in FIGS. 16 and 18 (FIG. 17 omits depiction of the shaft section 81), the shaft section 81 is rotatably supported by a bearing (not shown) provided in the connection mechanism 105.

The shaft section 81 has a rotary terminal 86a (see FIG. 11) that rotates integrally with the tire 80. The rotary terminal 86a is electrically connected to a fixed terminal 86b (see FIG. 12) provided in the connection mechanism 105. The fixed terminal 86b receives electric power from the rotary terminal 86a and supplies the power to the power supply target 103 via a transmission wire (not shown). Examples of the rotary terminal 86a include a rotating-side member of a slip ring and a rotating-side member of a rotary connector. Examples of the fixed terminal 86b include a fixed-side member of a slip ring and a fixed-side member of a rotary connector.

The restriction member 440 is fixed to the wheel 82. The restriction member 440 is disposed in the inner chamber 80e of the tire 80 due to the coupling section 442 being coupled to the wheel 82. In the example shown in FIG. 18, the coupling section 442 is connected to the body section 451 at a position on the inner side, in the radial direction R, of the inner-diameter wall section 80d of the tire 80.

The wheel 82 is formed of a material having higher rigidity than that of the tire 80. Examples of the material forming the wheel 82 include aluminum, iron, other metals, or synthetic resin.

Preferably, the wheel 82 is formed of a conductive material. In the present embodiment, the wheel 82 is formed of aluminum. With such a configuration, the wheel 82 can form part of the conductive path. Therefore, if a structure is adopted in which the conductive band 60 is brought into contact with the wheel 82, it is unnecessary to attach wiring to the wheel 82 for forming a conductive path from the conductive band 60 to the connection mechanism 105, thereby simplifying the structure of the wheel 82.

More preferably, in the case where the wheel 82 is formed of a conductive material, the restriction member 440 is also formed of a conductive material. In the present embodiment, the wheel 82 and the restriction member 440 are integrated and formed of aluminum. According to this configuration, a conductive path from the conductive band 60 to the connection mechanism 105 can be formed by bringing the conductive band 60 into contact with the restriction section 441. In the example shown in FIG. 18, the conductive path from the conductive band 60 to the connection mechanism 105 is formed by bringing the edge portions 444 of the restriction member 440 into contact with the conductive band 60. Accordingly, it is unnecessary to attach wiring to the wheel 82 for forming the conductive path from the conductive band 60 to the connection mechanism 105, thereby simplifying the structure of the wheel 82.

In the case where the restriction member 440 and the wheel 82 are integrally formed of a conductive material, if a structure is adopted in which each conductive body 83 can come into contact with the restriction member 440, a conductive path from the conductive body 83 to the connection mechanism 105 is formed simply by bringing the conductive body 83 into contact with the restriction member 440. Accordingly, in the case of adopting this structure, the conductive band 60 need not be provided, and the structure of the power reception body 10 is simplified.

The inner chamber 80e is filled with the filler member 146. In the present embodiment, the filler member 146 is packed into a space on the inner side of the conductive band 60 in the radial direction R, a space between the tread section 80b and the restriction section 441, and a space between the sidewall section 80c and the restriction section 441. With such a configuration, the filler member 146 can maintain the tire 80 in an appropriately inflated shape. Examples of the filler member 146 include flexible containers enclosing gel, liquid, gas, or the like, flexible porous materials such as urethane foam, non-conductive elastomers, conductive elastomers, and coil springs.

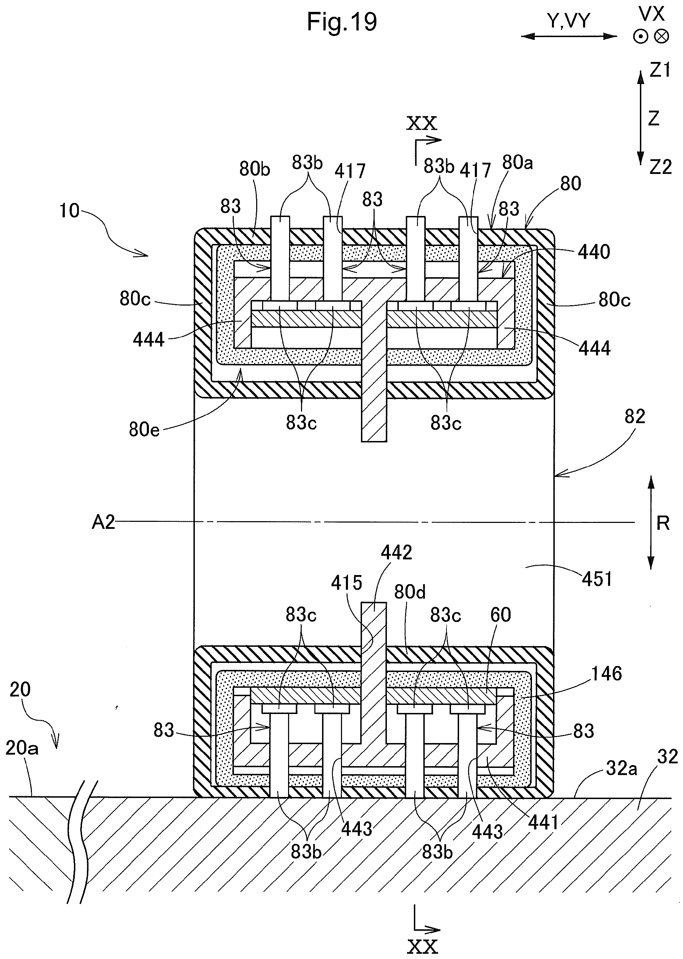

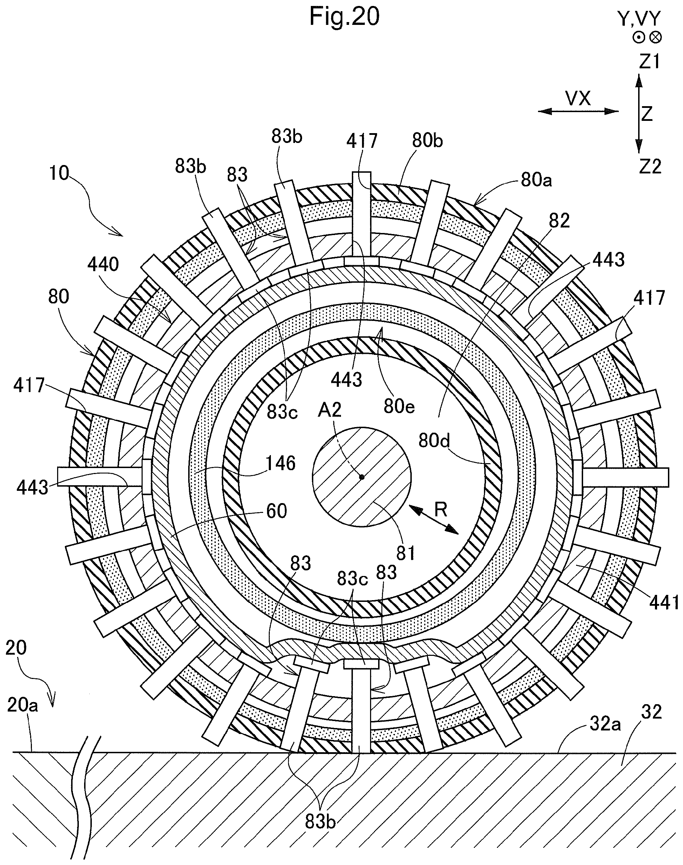

A method for using the power reception body 10 will be described with reference to FIGS. 17 to 20. FIGS. 19 and 20 show the power reception body 10 in a rotating state.

As shown in FIGS. 17 and 18, a conductive path from the power supply body 32 to the power supply target 103 is formed as a result of the power reception body 10 coming into contact with the power supply body 32. In the present embodiment, the connection mechanism 105 (see FIG. 16) places the power reception body 10 at a position where the power reception body 10 comes into contact with the power supply body 32. In this case, the power reception body 10 may come into contact with the power supply body 32 in either a rotating or non-rotating state. The power reception body 10 illustrated in FIGS. 17 and 18 is in contact with the power supply body 32 in a non-rotating state.

Specifically, the conductive path from the power supply body 32 to the power supply target 103 is formed as a result of any one of the plurality of conductive bodies 83 coming into contact with both the power supply body 32 and the conductive band 60. In this case, a conductive path is formed in which a current flows from the power supply body 32 to the conductive body 83, the conductive band 60, a wiring provided in the wheel 82 (in this embodiment, the wheel 82), the connection mechanism 105, and the power supply target 103 in this order. In the example shown in FIGS. 17 and 18, the conductive body 83 placed at a position closest to the surface 32a of the power supply body 32 is in contact with the power supply body 32. The locked section 83c of the conductive body 83 in contact with the power supply body 32 is in contact with the conductive band 60.

Preferably, the power reception body 10 is positioned such that the tire 80 is elastically compressed and deformed upon contact with the power supply body 32. By positioning the power reception body 10 in this manner, appropriate contact with the power supply body 32 can be achieved even if a recess is present in the power supply body 32. In the present embodiment, the power reception body 10 is pressed against the power supply body 32 by the connection mechanism 105 such that the tire 80 is elastically compressed.

In response to the power supply target 103 moving along the road 20, the tire 80 that had been in contact with the power supply body 32 rotates, as shown in FIGS. 19 and 20. With the rotation of the tire 80, the conductive bodies 83, the conductive band 60, the restriction member 440, the filler member 146, and the wheel 82 also rotate together with the tire 80.
In this case, the conductive bodies 83 move outward in the radial direction R due to centrifugal force. At the same time, the conductive band 60 is also deformed outward in the radial direction R due to centrifugal force, and presses the conductive bodies 83. In the example shown in FIGS. 19 and 20, the conductive band 60 bulges outward in the radial direction R due to centrifugal force and in contact with the locked sections 83c of the conductive bodies 83. A conductive path from the conductive bodies 83 to the power supply target 103 is thereby formed.

The restriction member 440 restricts movement of the conductive bodies 83 that move outward in the radial direction R. The restriction section 441 restrains the conductive bodies 83 from moving a certain amount or more outward in the radial direction R due to the conductive body 83 coming into contact with the restriction section 441 from the outer side in the radial direction R. At the same time, a conductive body 83 placed at a position close to the road surface 20a is restrained from moving outward in the radial direction R by coming into contact with the surface 32a of the power supply body 32.

While outward movement of the conductive bodies 83 in the radial direction R is restricted, the conductive bodies 83 are maintained in a state of protruding from the tread surface 80a of the tire 80. Accordingly, the conductive bodies 83 can reliably come into contact with the power supply body 32 without being hindered by the tire 80.

In response to the tire 80 rotating, conductive bodies 83 that reach a position closest to the surface 32a of the power supply body 32 sequentially come into contact with the power supply body 32. Thus, a state is continuously maintained in which any one of the conductive bodies 83 is in contact with the power supply body 32. As a result, electric power is stably supplied from the power supply facility 30 to the power supply target 103.

### [Other Embodiments]

Next, other embodiments of the power reception body 10 will be described.
(1) In the above embodiments, an example has been described in which the coupling member 51 is coupled to the base member 42 so as to be pivotable about the turning axis A3. However, such an example is not limiting. For example, the coupling member 51 may be integrally formed with the base member 42, or may be a separate member that is integrally fixed to the base member 42.
(2) In the above embodiments, an example has been described in which the power reception body 10 includes the rotary terminal 86a and the conductive wire 85, and the conductive band 60 is continuously disposed in the circumferential direction along the inner peripheral surface of the tread section 80b. However, such an example is not limiting. For example, a configuration may be adopted in which the power reception body 10 does not include the rotary terminal 86a and the conductive wire 85, and the conductive band 60 is electrically connected to the fixed terminal 86b via a brush. For example, the conductive band 60 need not be continuously disposed along the inner peripheral surface of the tread section 80b, or along the circumferential direction of the tire 80.
(3) In the above embodiments, an example has been described in which the conductive band 60 is a knitted or woven fabric using conductive yarn or conductive wire. However, such an example is not limiting. For example, the conductive band 60 may be a flexible busbar, a conductive elastomer, or the like.
(4) In the above embodiments, an example has been described in which the plurality of conductive bodies 83 are dispersed in the second width direction Y, and the dimension L1 of the conductive band 60 in the second width direction Y is set such that the conductive band 60 overlaps the entirety of the conductive bodies 83 as viewed in the radial direction. However, such an example is not limiting. For example, the conductive band 60 may be configured such that the conductive bodies 83 are arranged in a single row along the circumferential direction rather than being dispersed in the second width direction Y. For example, the conductive bodies 83 may be electrically connected to the conductive band 60 without overlapping the conductive band 60 as viewed in the radial direction.
(5) In the above embodiments, an example has been described in which the conductive band 60 electrically connects all of the N conductive wires 85 to each other, and the total cross-sectional area of the N conductive wires 85 is set in accordance with the magnitude of the current received from the power supply body 32. However, such an example is not limiting. For example, the conductive band 60 may be divided in the circumferential direction, and each divided portion may be independently connected to the rotary terminal 86a by different conductive wires 85. For example, the total cross-sectional area of the N conductive wires 85 need not be set in accordance with the magnitude of the current received from the power supply body 32.
(6) In the above embodiments, an example has been described in which the power reception body 10 includes the restriction section 441 and the restriction member 440 including the restriction section 441 that is disposed outward of the conductive band 60 and the plurality of locked sections 83c in the radial direction R. However, such an example is not limiting. For example, the restriction member 440 may be disposed inward of the locked sections 83c in the radial direction R. For example, the power reception body 10 need not include the restriction section 441. For example, each of the conductive bodies 83 need not have the locked section 83c. For example, the outer diameter of the inner end of each conductive body 83 in the radial direction R may be smaller than the diameter of the through-hole. For example, each of the conductive bodies 83 may be locked by the conductive wire 85 so as not to come off the tire 80.
(7) In the above embodiments, an example has been described in which the support arm 52 is a single arm member. However, such an example is not limiting. For example, the support arm 52 may be constituted by a plurality of arm members.
(8) In the above embodiments, an example has been described in which the first width direction Y is a direction along the vehicle width direction VY in the contacting orientation P1, and is a direction along the up-down direction Z in the stored orientation P3. However, such an example is not limiting. For example, in the contacting orientation P1, the first width direction Y may be a direction along the vehicle front-rear direction VX, and the second width direction may be a direction orthogonal to the vehicle front-rear direction VX.
(9) In the above embodiments, an example has been described in which the shaft section 81 is fixed to the support arm 52. However, such an example is not limiting. For example, the shaft section 81 may be supported on the support arm 52 via a bearing so as to be rotatable integrally with the rotary terminal 86a about the rotation axis A2.
(10) In the above embodiments, an example has been described in which the power supply body 32 is embedded in the road 20. However, such an example is not limiting. For example, the power supply body 32 may be disposed at a position above the road surface 20a or on the side thereof.
(11) In the above embodiments, an example has been described in which the power supply system 101 includes the connection mechanism 105. However, such an example is not limiting. For example, the power reception body 10 may be directly connected to the power supply target 103 without the connection mechanism 105. In this case, the power supply target 103 is electrically connected to the power reception body 10 and also rotatably holds the power reception body 10.
(12) In the above embodiments, an example has been described in which a non-conductive material is used for the tire 80. However, such an example is not limiting. For example, the tire 80 may be formed of a conductive material. Examples of such materials include a conductive elastomer and a conductive rubber.
(13) In the above embodiments, an example has been described in which the conductive band 60 is formed by combining a plurality of electric wires. However, such an example is not limiting. For example, the conductive band 60 may be a plate-shaped conductor, or a band-shaped body formed by combining conductive bodies other than electric wires.
(14) In the above embodiments, an example has been described in which the conductive body 83 is formed of a conductive member. However, such an example is not limiting. For example, the conductive body 83 may be a conductive yarn, a conductive wire, or another type of electric wire. In addition, the conductive body 83 may be a conductive twisted yarn formed by twisting a plurality of electric wires 36.
(15) In the above embodiments, an example has been described in which the locked section 83c is formed at the inner end of each conductive body 83 in the radial direction R. However, such an example is not limiting. For example, the conductive body 83 may include a conductive protruding portion (not shown) that protrudes inward in the radial direction R relative to the locked section 83c. A conductive path from the power supply body 32 to the power supply target 103 may be formed by bringing this protruding portion into contact with the conductive body 83.
(16) In the above embodiments, an example has been described in which the conductive path from the conductive body 83 to the power supply target 103 is formed by direct contact between the locked section 83c and the conductive band 60. However, such an example is not limiting. For example, a configuration may be adopted in which the locked section 83c does not come into directly contact with the conductive band 60, but a separate conductive member or conductive section is provided separately from the locked section 83c and is brought into contact with the conductive band 60 to form the conductive path from the conductive body 83 to the power supply target 103. As such a section, for example, a region subjected to thermal spraying to interpose a fine conductive material may be provided at a portion on the inner side of the locked section 83c in the radial direction R. A portion of the conductive path may also be formed in advance by using a member for fixing the conductive body 83 to the conductive band 60, or by fixing the conductive body 83 to the conductive band 60 using a fixing method such as welding.
(17) In the above embodiments, an example has been described in which the tread section 80b is cylindrical. However, such an example is not limiting. For example, the tread section 80b need only be configured to roll on the surface 32a of the power supply body 32, and is not limited to being cylindrical. Examples of the shape of the tread section 80b include a rounded-rectangle cross-section, an elliptical cross-section, or a ring in which the cross-section of the tread section 80b is arc-shaped.
(18) In the above embodiments, an example has been described in which the restriction section 441 is spaced apart outward of the conductive band 60 and the plurality of locked sections 83c in the radial direction R. However, such an example is not limiting. For example, the restriction section 441 may be disposed at a fixed position such that it comes into contact with the conductive band 60 and the plurality of locked sections 83c from the outer side in the radial direction R.
(19) In the above embodiments, an example has been described in which the coupling section 442 is disposed in the inner chamber 80e, with a portion of the coupling section 442 exposed to the outside the inner chamber 80e. However, such an example is not limiting. For example, the entire coupling section 442 may be disposed in the inner chamber 80e. Additionally, the coupling section 442 may be fixed to the wheel 82 via another member such as a bracket.
(20) In the above embodiments, an example has been described in which the conductive band 60 is a knitted or woven fabric using conductive yarn or conductive wire. However, such an example is not limiting. For example, the conductive band 60 may be a flexible busbar, a conductive elastomer, or the like.
(21) In the above embodiments, an example has been described in which the wheel 82 is formed of a conductive material. However, such an example is not limiting. For example, the wheel 82 may be formed of a non-conductive material. With such a configuration, the conductive path from the conductive band 60 to the power supply target 103 is formed by a conductive wire covered with an insulating coating.
(22) In the above embodiments, an example has been described in which the inner chamber 80e of the tire 80 is filled with the filler member 146. However, such an example is not limiting. For example, the filler member 146 may be fixed to at least one of the tire 80, the conductive band 60, and the restriction member 440, but need not be fixed.
(23) Note that the configurations disclosed in the above-described embodiments may be applied in combination with configurations disclosed in other embodiments, as long as no contradiction arises. Regarding other configurations as well, the embodiments disclosed in the present specification are merely illustrative in every respect. Therefore, various modifications may be made as appropriate without departing from the spirit of the present disclosure.

### Summary of the Above Embodiments

The wheel-type power reception body (10) according to the present disclosure will be described below.

As one aspect, the wheel-type power reception body (10) is a wheel-type power reception body configured to roll on a surface (32a) of a power supply body (32) installed on a road surface (20a) of a road (20) in such a manner as to extend along the road (20), and receive electric power supplied from the power supply body (32), and includes: a tire (80) formed of an elastic material and containing an inner chamber (80e); a conductive band (60) disposed in the inner chamber (80e); and a plurality of conductive bodies (83) dispersed along a tread surface (80a) serving as an outer peripheral surface of the tire (80), wherein the tire (80) has an annular tread section (80b) forming the tread surface (80a), the conductive band (60) is a band-shaped member having conductivity and flexibility, and is continuously disposed along a circumferential direction of the tire (80), and each of the plurality of conductive bodies (83) is disposed in such a manner as to extend through the tread section (80b), and is electrically connected to the conductive band (60).

According to this configuration, each of the plurality of conductive bodies (83), which are dispersed along the tread surface (80a) of the tire (80), is disposed so as to extend through the tread section (80b). Therefore, the portion of at least one of the conductive bodies (83) that is exposed in the tread surface (80a) can come into contact with the power supply body (32) and receive power from the power supply body 32 even while the tire (80) is rotating. In addition, each of the conductive bodies (83) is electrically connected to the conductive band (60), which is continuously disposed along the circumferential direction of the tire (80), thereby facilitating an increase in the reliability of the conductive connection of the conductive path for receiving power from the conductive bodies (83). Furthermore, since the conductive band (60) is a strip-shaped member having flexibility and is disposed in the inner chamber (80e) of the tire (80), it is easy to ensure the elastic deformability of the tire (80) while allowing connection between the conductive band (60) and a large number of conductive bodies (83).

As one aspect, the power reception body (10) includes: a rotary terminal (86a) disposed inward of the conductive band (60) in a radial direction (R) and configured to rotate integrally with the tire (80); and a conductive wire (85) electrically connecting the conductive band (60) and the rotary terminal (86a), wherein the conductive band (60) is continuously disposed in the circumferential direction along an inner peripheral surface of the tread section.

According to this configuration, each of the conductive bodies (83) is electrically connected to the conductive band (60), and the conductive band (60) is connected to the rotary terminal (86a) via the conductive wire (85). This makes it easier to reduce the number of conductive wires (85) than in a case where the conductive bodies (83) are individually connected to the rotary terminal (86a) by the conductive wires (85). Therefore, it is easy to ensure the elastic deformability of the tire (80).

As one aspect, the conductive band (60) is a knitted fabric using conductive thread or conductive wire, or a woven fabric using conductive thread or conductive wire.

According to this configuration, high conductivity and flexibility of the conductive band (60) can be easily ensured.

According to one aspect, the plurality of conductive bodies (83) are dispersed in the circumferential direction of the tread surface (80a) and in a width direction (second width direction Y) of the tread surface (80a), and the conductive band (60) has a dimension in the width direction (second width direction Y) that is set in such a manner that the conductive band (60) overlaps an entirety of the plurality of conductive bodies (83) dispersed in the width direction (second width direction Y) as viewed in a radial direction.

According to this configuration, the conductive bodies (83) are dispersed not only along the circumferential direction of the tread surface (80a) but also along the width direction of the tread surface (80a), thereby making it easy to secure a larger amount of electric power received by the conductive bodies (83). Furthermore, according to this configuration, the dimension L1 of the conductive band (60) in the width direction (the second width direction Y) is set such that the conductive band (60) overlaps the entirety of the conductive bodies (83) dispersed in the width direction (second width direction Y), as viewed in the radial direction. Therefore, all of the conductive bodies (83) can be easily connected to the conductive band (60).

As one aspect, the wheel-type power reception body (10) further includes: a rotary terminal (86a) disposed inward of the conductive band (60) in a radial direction (R) and configured to rotate integrally with the tire (80); and a conductive wire (85) electrically connecting the conductive band (60) and the rotary terminal (86a), wherein the conductive band (60) and the rotary terminal (86a) are connected by N conductive wires (85), where N is an integer of 1 or greater, each of the N conductive wires (85) being the conductive wire (85), the conductive band (60) is configured to electrically connect all of the N conductive wire (85)s to each other, and the N conductive wires (85) have a total cross-sectional area set in accordance with a magnitude of a current received from the power supply body (32).

According to this configuration, all of the N conductive wires (85), which are connected to each other by the conductive band (60), are capable of causing a necessary amount of current to flow, thereby making it easy to keep the cross-sectional area of each conductive wire (85) small. Therefore, it is easy to ensure the elastic deformability of the tire (80) and to achieve weight reduction of the power reception body (10).

As one aspect, the wheel-type power reception body (10) further includes a restriction member (440) having a restriction section (441) disposed in the inner chamber (80e), wherein each of the plurality of conductive bodies (83) has a locked section (83c) located inward of the tread section (80b) in a radial direction (R) perpendicular to a rotation axis of the tire (80), and the restriction section (441) is disposed outward of the conductive band (60) and the plurality of locked sections (83c) in the radial direction (R), and is configured to restrict outward movement of the conductive band (60) and the plurality of conductive bodies (83) in the radial direction (R).

According to this configuration, the restriction member (440) restricts outward movement of the conductive bodies (83) in the radial direction (R). Thus, deformation of the tire (80) can be limited within a predetermined range by centrifugal force acting on the conductive band (60) and the conductive bodies (83) during rotation of the tire (80). Accordingly, it is easy to suitably maintain the positional relationship between the conductive bodies (83) and the power supply body (32) even in the case where the tire (80) rotates at high speed. The reliability of the conductive connection to the power supply body (32) can also be easily increased in this regard.

According to one aspect, while no load acts on the tread section (80b), the restriction section (441) is disposed in such a manner as to be spaced apart inward of the tread section (80b) in the radial direction R and spaced apart outward of the conductive band (60) and the plurality of locked sections (83c) in the radial direction (R).

According to this configuration, the restriction section (441) is spaced apart inward of the tread section (80b) in the radial direction R, thereby making it unlikely that the restriction section (441) hinders elastic deformation of the tread section (80b) in the radial direction (R). Further, the restriction section (441) is spaced apart outward of the conductive band (60) and the locked sections (83c) in the radial direction (R), thereby making it unlikely that the restriction section (441) hinders movement of the conductive band (60) and the conductive bodies (83) in the radial direction (R) following elastic deformation of the tread section (80b). Therefore, the tread section (80b) and the conductive bodies (83) can be easily deformed or displaced following unevenness or the like of the power supply body (32), making it easier to maintain contact between the power supply body (32) and the conductive bodies (83).

According to one aspect, the wheel-type power reception body (10) is such that each of the conductive bodies (83) has a column-shaped section (83b) extending through the restriction section (441) and the tread section (80b) in the radial direction (R), the locked section (83c) is located inward of the column-shaped section (83b) in the radial direction (R) and has a dimension in at least either a third width direction (Y) or the circumferential direction of the tire (80), the dimension being larger than a corresponding dimension of the column-shaped section (83b), and the conductive band (60) is disposed in such a manner as to come into contact with the locked section (83c) from an inner side in the radial direction (R).

According to this configuration, the restriction section (441) is disposed outward of the conductive band (60) and the locked sections (83c) in the radial direction (R), and a configuration can be appropriately realized in which outward movement of the conductive band (60) and the conductive bodies (83) in the radial direction (R) is restricted. Further, according to this configuration, the conductive band (60) is disposed so as to come into contact with the locked sections (83c) from the radially inner side. Thus, good electrical connection between the conductive band (60) and the conductive bodies (83) can be easily maintained using the force directed inward in the radial direction R that is received from the power supply body (32) while the conductive bodies (83) are in contact with the power supply body (32).

According to one aspect, the wheel-type power reception body (10) further includes a wheel (82) supporting the tire (80) from an inner side in the radial direction (R), wherein the restriction member (440) is fixed to the wheel (82).

According to this configuration, the restriction section (441) can be disposed at a proper position within the inner chamber (80e) of the tire (80).

It is sufficient that the wheel-type power reception body according to the present disclosure achieves at least one of the above-described effects.

### Description of Reference Signs

10: Power reception body (wheel-type power reception body)
12: Power reception device
16: Wheel
20: Road
20a: Road surface
32: Power supply body
32a: Surface
36: Electric wire
80: Tire
80a: Tread surface
80b: Tread section
80e: Inner chamber
80f: Inner peripheral surface
82: Wheel
83: Conductive body
83b: Column-shaped section
83c: Locked section
84: Conductive band
85: Conductive wire
86a: Rotary terminal
101: Power supply system
440: Restriction member
441: Restriction section
A2: Pivot axis
L1: Dimension in width direction of conductive band
Y: Second width direction, third width direction (width direction)

## Claims

1. A wheel-type power reception body configured to roll on a surface of a power supply body installed on a road surface of a road in such a manner as to extend along the road, and receive electric power supplied from the power supply body, the wheel-type power reception body comprising:
a tire formed of an elastic material and containing an inner chamber;
a conductive band disposed in the inner chamber; and
a plurality of conductive bodies dispersed along a tread surface serving as an outer peripheral surface of the tire,
wherein the tire has an annular tread section forming the tread surface,
the conductive band is a band-shaped member having conductivity and flexibility, and is continuously disposed along a circumferential direction of the tire, and
each of the plurality of conductive bodies is disposed in such a manner as to extend through the tread section, and is electrically connected to the conductive band.

2. The wheel-type power reception body according to claim 1, further comprising:
a rotary terminal disposed inward of the conductive band in a radial direction and configured to rotate integrally with the tire; and
a conductive wire electrically connecting the conductive band and the rotary terminal,
wherein the conductive band is continuously disposed along an inner peripheral surface of the tread section.

3. The wheel-type power reception body according to claim 1 or 2,
wherein the conductive band is a knitted fabric using conductive thread or conductive wire, or a woven fabric using conductive thread or conductive wire.

4. The wheel-type power reception body according to claim 1 or 2,
wherein the plurality of conductive bodies are dispersed in the circumferential direction of the tread surface and in a width direction of the tread surface, and
the conductive band has a dimension in the width direction that is set in such a manner that the conductive band overlaps an entirety of the plurality of conductive bodies dispersed in the width direction as viewed in a radial direction.

5. The wheel-type power reception body according to claim 1 or 2, further comprising:
a rotary terminal disposed inward of the conductive band in a radial direction and configured to rotate integrally with the tire; and
a conductive wire electrically connecting the conductive band and the rotary terminal,
wherein the conductive band and the rotary terminal are connected by N conductive wires, where N is an integer of 1 or greater, each of the N conductive wires being the conductive wire,
the conductive band is configured to electrically connect all of the N conductive wires to each other, and
the N conductive wires have a total cross-sectional area set in accordance with a magnitude of a current received from the power supply body.

6. The wheel-type power reception body according to claim 1 or 2, further comprising:
a restriction member having a restriction section disposed in the inner chamber,
wherein each of the plurality of conductive bodies has a locked section located inward of the tread section in a radial direction perpendicular to a rotation axis of the tire, and
the restriction section is disposed outward of the conductive band and the plurality of locked sections in the radial direction, and is configured to restrict outward movement of the conductive band and the plurality of conductive bodies in the radial direction.

7. The wheel-type power reception body according to claim 6,
wherein, while no load acts on the tread section, the restriction section is disposed in such a manner as to be spaced apart inward of the tread section in the radial direction and spaced apart outward of the conductive band and the plurality of locked sections in the radial direction.

8. The wheel-type power reception body according to claim 6,
wherein each of the conductive bodies has a column-shaped section extending through the restriction section and the tread section in the radial direction,
the locked section is located inward of the column-shaped section in the radial direction and has a dimension in at least either a width direction or the circumferential direction of the tire, the dimension being larger than a corresponding dimension of the column-shaped section, and
the conductive band is disposed in such a manner as to come into contact with the locked section from an inner side in the radial direction.

9. The wheel-type power reception body according to claim 6, further comprising:
a wheel supporting the tire from an inner side in the radial direction,
wherein the restriction member is fixed to the wheel.
